# EUROPEAN PATENT APPLICATION

(11) **EP 2 096 735 A1**
(43) Date of publication of application: **02.09.2009**
(21) Application number: 07830734.5
(22) Date of filing: 29.10.2007
(51) Int. Cl.: H02K 1/27, H02K 21/24

(54) **AXIAL GAP MOTOR**

(30) Priority: 06.12.2006 JP 2006329491; 06.12.2006 JP 2006329492; 26.06.2007 JP 2007167489
(71) Applicant: Honda Motor Co., Ltd., Tokyo 107-8556 (JP)
(72) Inventor: ATARASHI, Hirofumi, Wako-shi Saitama 351-0193 (JP); ISEGAWA, Hiroyuki, Wako-shi Saitama 351-0193 (JP); ABE, Shoei, Wako-shi Saitama 351-0193 (JP); YAMAMOTO, Keiichi, Wako-shi Saitama 351-0193 (JP); TAJIMA, Shigeru, Wako-shi Saitama 351-0193 (JP)
(74) Representative: Rupp, Christian
(86) International application number: PCT/JP2007/071000
(87) International publication number: WO 2008/068977

(57) **Abstract**

An axial gap motor, including: a rotor having permanent magnet pieces; and a pair of stators that are oppositely arranged so as to sandwich the rotor in a rotation axis direction thereof, wherein: the rotor includes magnetic material pieces that are arranged along a circumferential direction thereof in a manner alternating with the permanent magnet pieces; the permanent magnet pieces have a magnetization direction in parallel with the rotation axis direction, with N poles thereof opposed to the stator on one side in the rotation axis direction, and with S poles thereof opposed to the stator on the other side in the rotation axis direction; and each of the magnetic material pieces includes magnetic material piece penetration portions that penetrate in a direction parallel to the rotation axis direction.

## Description

### TECHNICAL FIELD

The present invention relates to an axial gap motor.

### BACKGROUND ART

Conventionally, axial gap-type permanent magnet synchronous motors are known which include, for example, a pair of stators oppositely arranged so as to sandwich a rotor in a rotation axis direction, in which magnetic flux loops via the pair of stators are formed for field magnetic flux by permanent magnets of the rotor (see, for example, Patent Document 1 and Patent Document 2).
Patent Document 1: Japanese Unexamined Patent Publication, First Publication No. H10-271784
Patent Document 2: Japanese Unexamined Patent Publication, First Publication No. 2001-136721

However, in the permanent magnet synchronous motor according to the above conventional technique, a permanent magnet synchronous motor provided with a rotor where permanent magnets magnetized only in one direction along the rotation axis direction and magnetic materials are alternately arranged in the circumferential direction poses a problem in that, for example, magnetic torque is halved and also that it is not possible to effectively utilize a reluctance torque, compared with the case of a permanent magnet synchronous motor provided with a rotor where permanent magnets with opposite magnetization directions are alternately arranged in the circumferential direction.
Moreover, a permanent magnet synchronous motor provided with a rotor where permanent magnets with opposite magnetization directions are alternately arranged in the circumferential direction and also where a magnetic material is arranged between permanent magnets circumferentially adjacent to each other poses a problem in that it is not possible to effectively utilize a magnetic torque and a reluctance torque because the magnetic torque and the reluctance torque are different in phase.
In addition, the permanent magnets of the rotor are only opposed to the stator via an air gap. Therefore, there is a possibility that a reduction in permeance and demagnetization are likely to occur. To address such a problem, if the resistance of the permanent magnet to the demagnetization field is increased, there is a possibility of decrease in magnetic flux density. This makes it difficult to improve the output and efficiency of the permanent magnet synchronous motor.
For such a permanent magnet generator, it is desired that eddy current loss by the armature flux generated when current is applied to the stator be reduced to thereby improve operation efficiency of the permanent magnet generator, while at the same time an amount of interlinking magnetic flux interlinking the stator winding of the stator is further increased to thereby increase torque potential.

### DISCLOSURE OF INVENTION

The present invention has been achieved in view of the above circumstances. It is an object of the present invention to provide an axial gap motor capable of reducing eddy current generated when current is applied to thereby improve operation efficiency, while at the same time effectively utilizing the permanent magnets and the magnetic materials provided in the rotor to thereby effectively increase output.
Furthermore, it is another object thereof to provide an axial gap motor capable of effectively utilizing the permanent magnets and the magnetic materials provided in the rotor to thereby effectively increase the output.

To solve the above problems and achieve the above objects, the present invention adopts the following. An axial gap motor according to a first aspect of the present invention includes: a rotor having permanent magnet pieces; and a pair of stators that are oppositely arranged so as to sandwich the rotor in a rotation axis direction thereof, wherein: the rotor includes magnetic material pieces that are arranged along a circumferential direction thereof in a manner alternating with the permanent magnet pieces; the permanent magnet pieces have a magnetization direction in parallel with the rotation axis direction, with N poles thereof opposed to the stator on one side in the rotation axis direction, and with S poles thereof opposed to the stator on the other side in the rotation axis direction; and each of the magnetic material pieces includes magnetic material piece penetration portions that penetrate in a direction parallel to the rotation axis direction.

In an axial gap motor according to a second aspect of the present invention, a magnetic material member is provided on a surface of each of the permanent magnet pieces, the surface facing either one of the one side and the other side in the rotation axis direction, or alternatively on surfaces of each of the permanent magnet pieces, one of the surfaces facing the one side and the other of the surfaces facing the other side in the rotation axis direction.

In an axial gap motor according to a third aspect of the present invention, each of the magnetic material members further includes a penetration portion in a vicinity of circumferential end portions, the penetration portion penetrating in the direction parallel to the rotation axis direction.

An axial gap motor according to a fourth aspect of the present invention further includes sub-permanent magnets each of which is arranged along circumferential end portions of each of the permanent magnet pieces, the sub-permanent magnets being magnetized in a direction perpendicular to the rotation axis direction and a radial direction.

An axial gap motor according to a fifth aspect of the present invention further includes second sub-permanent magnets each of which is arranged along radial end portions of each of the permanent magnet pieces, the second sub-permanent magnets being magnetized in the radial direction.

An axial gap motor according to a sixth aspect of the present invention further includes partition members each of which is arranged between the permanent magnet piece and the magnetic material piece that are circumferentially adjacent to each other, the partition members being made of a non-magnetic material.

An axial gap motor according to a seventh aspect of the present invention further includes partition members each of which is arranged between the permanent magnet piece and the magnetic material piece that are circumferentially adjacent to each other, the partition members being made of a non-magnetic material.

An axial gap motor according to an eighth aspect of the present invention further includes spacer members each of which is arranged, on both end portions in the rotation axis direction of the partition member, between the magnetic material member and the magnetic material piece that are circumferentially adjacent to each other, the spacer members being made of a non-magnetic material.

In an axial gap motor according to a ninth aspect of the present invention, the spacer members have a hollow shape.

In an axial gap motor according to a tenth aspect of the present invention, the spacer members are made of a stacked layer structure where the non-magnetic materials with an insulating property and the non-magnetic materials with a non-insulating property are stacked.

In an axial gap motor according to an eleventh aspect of the present invention, the partition members have a hollow shape.

In an axial gap motor according to a twelfth aspect of the present invention, the partition members are made of a stacked layer structure where the non-magnetic materials with an insulating property and the non-magnetic materials with a non-insulating property are stacked.

An axial gap motor according to a thirteenth aspect of the present invention further includes: an inner circumferential side ring arranged on an inner circumferential side of the rotor; and an outer circumferential side ring arranged on an outer circumferential side of the rotor, wherein the partition members connects the inner circumferential side ring and the outer circumferential side ring in a state of being arranged coaxially to each other, to thereby form ribs.

In addition, an axial gap motor according to a fourteenth aspect of the present invention includes: a rotor having permanent magnet pieces; and a pair of stators that are oppositely arranged so as to sandwich the rotor in a rotation axis direction thereof, wherein: the rotor includes: magnetic material members each of which is arranged on surfaces of the permanent magnet pieces, one of the surfaces facing one side and the other of the sufaces facing the other side in the rotation axis direction; and spacers each of which is provided between the permanent magnet pieces that are circumferentially adjacent to each other, the spacers being gaps or being made of a non-magnetic material; and each of the magnetic material members includes penetration portions in a vicinity of circumferential end portions, the penetration portions penetrating in a direction parallel to the rotation axis direction.

Further, an axial gap motor according to a fifteenth aspect of the present invention includes: a rotor having permanent magnet pieces; and a pair of stators that are oppositely arranged so as to sandwich the rotor in a rotation axis direction thereof, wherein: the rotor includes: magnetic material members each of which is arranged on surfaces of the permanent magnet pieces, one of the surfaces facing one side and the other of the surfaces facing the other side in the rotation axis direction; and spacers each of which is provided between the permanent magnet pieces that are circumferentially adjacent to each other, the spacers being gaps or being made of a non-magnetic material; and each of the magnetic material members includes taper-like or arc-like chamfered shapes, each on each circumferential end portion.

In an axial gap motor according to a sixteenth aspect of the present invention, each of the magnetic material members further includes penetration portions in a vicinity of circumferential end portions, the penetration portions penetrating in the direction parallel to the rotation axis direction.

In an axial gap motor according to a seventeenth aspect of the present invention, the rotor further includes magnetic material pieces that are arranged in a manner alternating with the permanent magnet pieces in a circumferential direction.

In an axial gap motor according to an eighteenth aspect of the present invention, each of the magnetic material pieces further includes magnetic material piece penetration portions that penetrate in the direction parallel to the rotation axis.

According to the axial gap motor of the first aspect of the present invention, the permanent magnet pieces arranged in the circumferential direction of the rotor in a manner alternating with the magnetic material pieces are disposed with only the N poles opposed to one of the pair of stators and only the S poles opposed to the other. Therefore, in application of current to the stator windings of the stators, an optimal conduction phase for a torque coincides with an optimal conduction phase for a reluctance torque. As a result, it is possible to effectively utilize the magnet torque and the reluctance torque, to thereby effectively increase an output.
Furthermore, the magnetic material piece penetration portions penetrating in the direction parallel to the rotation axis direction are provided in the magnetic material, the magnetic material piece penetration portions being for example through holes, slits, or the like. This makes it possible to form magnetic paths that penetrate the magnetic material piece between the pair of stators. Therefore, it is possible to impart desired magnetic directionality to electric current flux lines by the stator windings of the stators. As a result, it is possible to increase the torque to be outputted. Furthermore, with the formation of the above magnetic paths, it is possible to perform waveform shaping of the electric current flux by the stator windings of the pair of stators so as to suppress an abrupt change in magnetic resistance between the pair of stators. As a result, it is possible to suppress the occurrence of a torque ripple and a harmonic of an electric current flux waveform, to thereby reduce iron loss.

According to the axial gap motor of the second aspect of the present invention, the magnetic material member is provided on the surface of the permanent magnet piece. Therefore, a decrease in permeance of the permanent magnet piece is prevented. As a result, it is possible to suppress demagnetization of the permanent magnet piece, and also to increase the reluctance torque.

According to the axial gap motor of the third aspect of the present invention, the penetration portions are provided in the vicinity of circumferential end portions of the magnetic material, the penetration portions being composed, for example, of a through hole that penetrates in the direction parallel to the rotation axis direction, a slit, or the like. This makes it possible to form magnetic paths that penetrate the magnetic material member between the pair of stators. Therefore, it is possible to impart desired magnetic directionality to electric current flux lines by the stator windings of the stators. As a result, it is possible to increase the torque to be outputted. Furthermore, with the formation of the above magnetic paths, it is possible to perform waveform shaping of the electric current flux by the stator windings of the pair of stators so as to suppress an abrupt change in magnetic resistance between the pair of stators. As a result, it is possible to suppress the occurrence of a torque ripple and a harmonic of an electric current flux waveform to thereby reduce iron loss.

According to the axial gap motor of the fourth aspect of the present invention, the sub-permanent magnets are provided along circumferentially end portions of each of the permanent magnet piece, the sub-permanent magnets being magnetized in a direction orthogonal to the magnetization direction of the permanent magnet piece. This makes it possible to converge the magnetic flux lines of the permanent magnet pieces and the sub-permanent magnets due to the magnetic flux lens effect by a so-called Halbach arrangement of permanent magnets and sub-permanent magnets. As a result, it is possible to increase an amount of magnetic flux that interlinks the stator windings of the stators.
According to the axial gap motor of the fifth aspect of the present invention, the second sub-permanent magnets are provided along circumferentially end portions of each of the permanent magnet piece, the second sub-permanent magnets being magnetized in a direction orthogonal to the magnetization direction of the permanent magnet piece. This makes it possible to converge the magnetic flux lines of the permanent magnet pieces and the second sub-permanent magnets due to the magnetic flux lens effect by a so-called Halbach arrangement of permanent magnets and second sub-permanent magnets. As a result, it is possible to increase the amount of magnetic flux that interlinks the stator windings of the stators.

According to the axial gap motor of the sixth aspect or the seventh aspect of the present invention, the partition member made of a non-magnetic material is arranged between the permanent magnet piece and the magnetic material piece that are circumferentially adjacent to each other. Therefore, it is possible to effectively utilize the magnetic flux of every permanent magnet piece while securing desired rigidity as a structure. As a result, it is possible to improve operating efficiency of the axial gap motor.

According to the axial gap motor of the eighth aspect of the present invention, the spacer members made of a non-magnetic material are provided, each of the spacer members being arranged, on both end portions in the rotation axis direction of the partition member, between the magnetic material member and the magnetic material piece that are circumferentially adjacent to each other. Therefore, it is possible to effectively utilize the magnetic flux of every permanent magnet piece while improving rigidity as a structure. As a result, it is possible to improve operating efficiency of the axial gap motor.

According to the axial gap motor of the ninth aspect of the present invention, the spacer members have a hollow shape. This makes it possible to improve the magnetic insulation ability. Therefore, it is possible to effectively utilize the magnetic flux of every permanent magnet piece, to reduce eddy current loss by the armature magnetic flux produced when current is applied, to increase torque potential, and to prevent excessive increase in temperature due to Joule heating. As a result, it is possible to improve operating efficiency of the axial gap motor.

According to the axial gap motor of the tenth aspect of the present invention, the spacer members are made of a stacked layer structure where the electrically insulating non-magnetic materials and the electrically non-insulating non-magnetic materials are stacked. Therefore, it is possible to reduce eddy current loss by the armature magnetic flux produced when current is applied, to increase torque potential, and to prevent excessive increase in temperature due to Joule heating. As a result, it is possible to improve operating efficiency of the axial gap motor.

According to the axial gap motor of the eleventh aspect of the present invention, the partition members have a hollow shape. This makes it possible to improve the magnetic insulation ability. Therefore, it is possible to effectively utilize the magnetic flux of every permanent magnet piece, to reduce eddy current loss by the armature magnetic flux produced when current is applied, to increase torque potential, and to prevent excessive increase in temperature due to Joule heating. As a result, it is possible to improve operating efficiency of the axial gap motor.

According to the axial gap motor of the twelfth aspect of the present invention, the partition members are made of a stacked layer structure where the electrically insulating non-magnetic materials and the electrically non-insulating non-magnetic materials are stacked. Therefore, it is possible to reduce eddy current loss by the armature magnetic flux produced when current is applied, to increase torque potential, and to prevent excessive increase in temperature due to Joule heating. As a result, it is possible to improve operating efficiency of the axial gap motor.

According to the axial gap motor of the thirteenth aspect of the present invention, the inner circumferential side ring and the outer circumferential side ring that sandwich the permanent magnet pieces and the magnetic material pieces in the radial direction are coupled by the partition member. Therefore, it is possible to easily secure desired rigidity as a structure

According to the axial gap motor of the fourteenth aspect of the present invention, the magnetic material members are provided on the surfaces of the permanent magnet piece. Therefore, a decrease in permeance of the permanent magnet piece is prevented. As a result, it is possible to suppress demagnetization of the permanent magnet piece, and also to increase the reluctance torque.
Furthermore, the penetration portions are provided in the vicinity of circumferential end portions of the magnetic material. This makes it possible to form magnetic paths that penetrate the magnetic material member between the pair of stators. Therefore, it is possible to impart desired magnetic directionality to electric current flux lines by the stator windings of the stators. As a result, it is possible to increase the torque to be outputted. Furthermore, with the formation of the above magnetic paths, it is possible to perform waveform shaping of the electric current flux by the stator windings of a pair of stators so as to suppress an abrupt change in magnetic resistance between the pair of stators. As a result, it is possible to suppress the occurrence of a torque ripple and a harmonic of an electric current flux waveform, to thereby reduce iron loss.

According to the axial gap motor of the fifteenth aspect of the present invention, the magnetic material members are provided on the surfaces of the permanent magnet piece. Therefore, a decrease in permeance of the permanent magnet piece is prevented. As a result, it is possible to suppress demagnetization of the permanent magnet piece, and also to increase the reluctance torque.
Furthermore, the magnetic material members have their circumferential ends in a taper-like or arc-like chamfered shape. Therefore, it is possible to suppress the occurrence of a torque ripple.

According to the axial gap motor of the sixteenth aspect of the present invention, the penetration portions are provided in the vicinity of circumferential end portions of the magnetic material. This makes it possible to form magnetic paths that penetrate the magnetic material member between the pair of stators. Therefore, it is possible to impart desired magnetic directionality to electric current flux lines by the stator windings of the stators. As a result, it is possible to increase the torque to be outputted. Furthermore, with the formation of the above magnetic paths, it is possible to perform waveform shaping of the electric current flux by the stator windings of the pair of stators so as to suppress an abrupt change in magnetic resistance between the pair of stators. As a result, it is possible to suppress the occurrence of a torque ripple and a harmonic of an electric current flux waveform, to thereby reduce iron loss.

According to the axial gap motor of the seventeenth aspect of the present invention, while suppressing an increase in amount of the permanent magnets required for the construction of the rotor, it is possible to effectively utilize the reluctance torque by the magnetic material pieces, to thereby effectively increase the output.
According to the axial gap motor of the eighteenth aspect of the present invention, the magnetic material piece penetration portions are provided in the magnetic material piece. This makes it possible to form magnetic paths that penetrate the magnetic material piece between the pair of stators. Therefore, it is possible to impart desired magnetic directionality to electric current flux lines by the stator windings of the stators. As a result, it is possible to increase the torque to be outputted. Furthermore, with the formation of the above magnetic paths, it is possible to perform waveform shaping of the electric current flux by the stator windings of the pair of stators so as to suppress an abrupt change in magnetic resistance between the pair of stators. As a result, it is possible to suppress the occurrence of a torque ripple and a harmonic of an electric current flux waveform, to thereby reduce iron loss.

### BRIEF DESCRIPTION OF THE DRAWINGS

FIG. 1 is a perspective view showing an axial gap motor according to a first embodiment of the present invention.
FIG. 2 is an exploded perspective view showing the axial gap motor according to the embodiment.
FIG. 3 is an explosive perspective view showing a rotor of an axial gap motor according to a first modified example of the embodiment.
FIG. 4 is an explosive perspective view showing a rotor of an axial gap motor according to a second modified example of the embodiment.
FIG. 5 is an explosive perspective view showing a rotor of an axial gap motor according to a third modified example of the embodiment.
FIG. 6 is an explosive perspective view showing a rotor of an axial gap motor according to a fourth modified example of the embodiment.
FIG. 7 is a plan view showing the axial gap motor according to the modified example of the embodiment.
FIG. 8 is a perspective view of an axial gap motor of a fifth modified example of the embodiment.
FIG. 9 is an exploded perspective view showing a rotor of the axial gap motor according to the modified example of the embodiment.
FIG. 10 is a perspective view of an axial gap motor of a sixth modified example of the embodiment.
FIG. 11 is an exploded perspective view showing a rotor of the axial gap motor according to the modified example of the embodiment.
FIG. 12 is a perspective view showing an axial gap motor according to the modified example of the embodiment.
FIG. 13 is an exploded perspective view showing a rotor of the axial gap motor according to the modified example of the embodiment.
FIG. 14 is an exploded perspective view showing a rotor of an axial gap motor according to a seventh modified example of the embodiment.
FIG. 15 is a perspective view of a radial rib of an axial gap motor according to an eighth modified example of the embodiment.
FIG. 16 is a cross-sectional view in a radial direction of the main part of the axial gap motor according to the modified example of the embodiment.
FIG. 17 is a perspective view of a radial rib of an axial gap motor according to a ninth modified example of the embodiment.
FIG. 18 is a perspective view of a radial rib of an axial gap motor according to a tenth modified example of the embodiment.
FIG. 19 is a cross-sectional view in a radial direction of the main part of an axial gap motor according to an eleventh modified example of the embodiment.
FIG. 20 is a cross-sectional view in a radial direction of the main part of an axial gap motor according to a twelfth modified example of the embodiment.
FIG. 21 is a cross-sectional view in a radial direction of the main part of an axial gap motor according to a thirteenth modified example of the embodiment.
FIG. 22 is a perspective view showing an axial gap motor according to a second embodiment of the present invention.
FIG. 23 is an exploded perspective view showing a rotor of the axial gap motor according to the embodiment.
FIG. 24 is a plan view showing the rotor of the axial gap motor according to the embodiment.
FIG. 25 is a perspective view showing an axial gap motor according to a first modified example of the embodiment.
FIG. 26 is an exploded view showing a rotor of the axial gap motor according to the modified example of the embodiment.
FIG. 27 is a plan view showing the rotor of the axial gap motor according to the modified example of the embodiment.
FIG. 28 is an exploded view showing a rotor of an axial gap motor according to a second modified example of the embodiment.
FIG. 29 is a perspective view showing an axial gap motor according to a third embodiment of the present invention.
FIG. 30 is an exploded perspective view of a rotor of the axial gap motor according to the embodiment.
FIG. 31 is an exploded perspective view showing a rotor of an axial gap motor according to a first modified example of the embodiment.
FIG. 32 is an exploded perspective view showing a rotor of an axial gap motor according to a second modified example of the embodiment.
FIG. 33 is an exploded perspective view showing a rotor of an axial gap motor according to a third modified example of the embodiment.

### DESCRIPTION OF THE REFERENCE SYMBOLS

10: axial gap motor
11: rotor
32: magnetic material piece
34: radial rib (partition member)
34a: electrically non-insulating non-magnetic material
34b: electrically insulating non-magnetic material
35: inner circumferential side cylindrical portion (inner circumferential side ring)
36: outer circumferential side cylindrical portion (outer circumferential side ring)
41: permanent magnet piece
42: magnetic material member
42a: through hole (penetration portion)
42b: outer circumferential side slit (penetration portion)
42c: inner circumferential side slit (penetration portion)
45: magnetic material piece through hole (magnetic material piece penetration portion)
45a: outer circumferential side slit (magnetic material piece penetration portion)
45b: inner circumferential side slit (magnetic material piece penetration portion)
47: magnetic material piece through hole (magnetic material piece penetration portion)
51: circumferentially arranged sub-permanent magnet (sub-permanent magnet)
52a: inner circumferentially arranged sub-permanent magnet (second sub-permanent magnet)
52b: outer circumferentially arranged sub-permanent magnet (second sub-permanent magnet)
110: axial gap motor
111: rotor
112: stator
132: magnetic material piece
141: permanent magnet piece
142: magnetic material member
142a: through hole (penetration portion)
142b1: inner circumferential side slit (penetration portion)
142b2: outer circumferential side slit (penetration portion)
142c: chamfered shape
145: magnetic material piece through hole (magnetic material piece penetration portion)
145a: outer circumferential side slit (magnetic material piece penetration portion)
145b: inner circumferential side slit (magnetic material piece penetration portion)

### BEST MODE FOR CARRYING OUT THE INVENTION

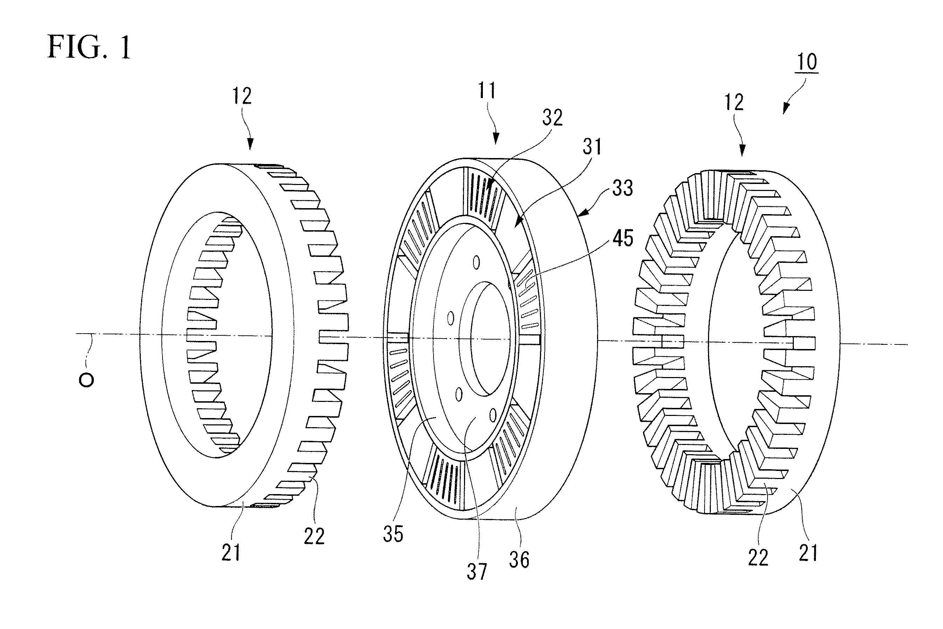

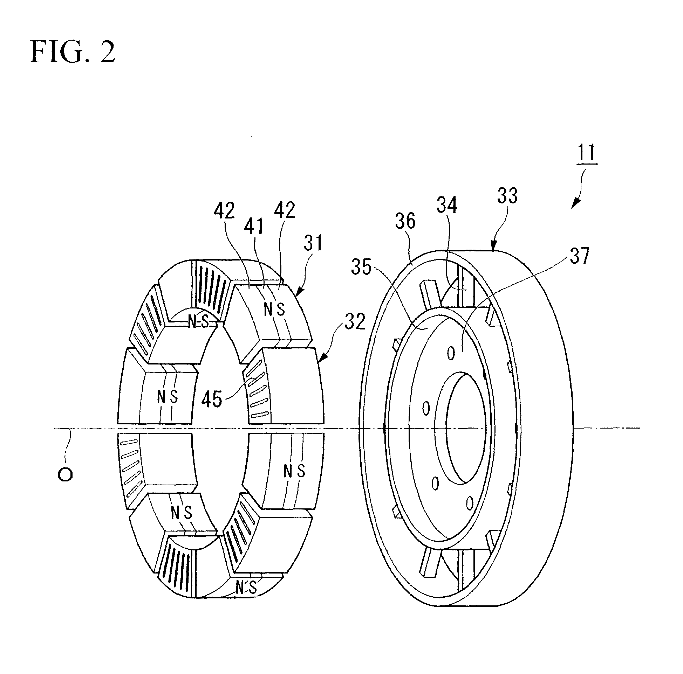

Hereunder is a description of a first embodiment of an axial gap motor of the present invention with reference to the appended drawings.
An axial gap motor 10 according to the present embodiment includes a substantially annular rotor 11 and a pair of stators 12 and 12, as shown for example in FIG. 1 and FIG. 2. Here, the substantially annular rotor 11 is provided rotatably about a rotation axis O of the axial gap motor 10. The pair of stators 12 and 12 are oppositely arranged so as to sandwich the rotor 11 in the rotation axis O direction. The stator 12 has stator windings with a plurality of phases that generate a rotating magnetic field for rotating the rotor 11.

The axial gap motor 10 is mounted as a drive source in, for example, a motor vehicle such as a hybrid motor vehicle or an electric motor vehicle, and has its output shaft connected to an input shaft of a transmission (not shown in the figures). Thereby, the driving force of the axial gap motor 10 is transmitted to the drive wheels (not shown in the figures) of the motor vehicle via the transmission.

When a driving force is transmitted to the axial gap motor 10 from the drive wheels in deceleration of the vehicle, the axial gap motor 10 functions as a generator, to thereby generate a so-called regenerative braking force. As a result, the axial gap motor 10 recovers the motive energy of the vehicle body as electric energy (regenerative energy). Furthermore, in a hybrid motor vehicle, for example, when the rotation shaft of the axial gap motor 10 is coupled to a crankshaft of an internal combustion engine (not shown in the figures), the axial gap motor 10 also functions as a generator even if an output of the internal combustion engine is transmitted to the axial gap motor 10. As a result, the axial gap motor 10 produces energy.

As shown, for example, in FIG. 1, each of the stators 12 includes: a substantially annular plate-shaped yoke portion 21; a plurality of teeth 22, ..., and 22; and stator windings (not shown in the figure) each fitted between appropriate teeth 22 and 22. Here, the teeth 22, ..., and 22 protrude toward the rotor 111 from positions on an opposing surface of the yoke portion 21 that is opposed to the rotor 11 and also extends in the radial direction, the positions being circumferentially spaced apart by a predetermined distance along the rotation axis O direction.

Each of the stators 12 is, for example, of 6N type with six main poles (for example, U⁺, V⁺, W⁺, U⁻, V⁻, W⁻). It is configured such that a U⁺, V⁺, W⁺ poles of one stator 12 are respectively opposed to a U⁻, V⁻, W⁻ poles of the other stator 12 in the rotation axis O direction.
For example, in a pair of stators 12 and 12 opposed to each other in the rotation axis O direction, three teeth 22, 22, and 22 of one stator 12 corresponding to a U⁺, V⁺, W⁺ poles are set to be opposed in the rotation axis O direction to three teeth 22, 22, and 22 of the other stator 12 corresponding to a U⁻, V⁻, W⁻ poles. That is, in a pair of stators 12 and 12 opposed to each other in the rotation axis O direction, a current-carrying state of the teeth 22 of one stator 12 is set to be a reversal of a current-carrying state of the teeth 22 of the other stator 12 in terms of electric angle.

As shown for example in FIG. 2, the rotor 11 includes: a plurality of magnet pieces 31, ..., and 31; a plurality of magnetic material pieces 32, ..., and 32; and a rotor frame 33 made of a non-magnetic material. The magnet pieces 31 and the magnetic material pieces 32 are contained in the rotor frame 33 in a state of being alternately arranged in the circumferential direction.

The rotor frame 33 includes: an inner circumferential side cylindrical portion 35; an outer circumferential side cylindrical portion 36; and a connection portion 37. Here, the inner circumferential side cylindrical portion 35 is connected by means of a plurality of pillar-shaped radial ribs 34, ..., 34 that are circumferentially arranged with a predetermined distance spaced apart. Furthermore, the connection portion 37 is formed in an annular plate shape that protrudes inwardly from an inner circumferential surface of the inner circumferential side cylindrical portion 35, and is connected to an external drive shaft (for example, an input shaft of a transmission for a motor vehicle, or the like).
The magnet pieces 31 and the magnetic material pieces 32 contained in the rotor frame 33 are sandwiched by the inner circumferential side cylindrical portion 35 and the outer circumferential side cylindrical portion 36 in the radial direction, and are also arranged so as to be circumferentially adjacent to each other with the radial rib 34 interposed therebetween.

The magnet piece 31 includes: a substantially fan-like plate-shaped permanent magnet piece 41 magnetized in a thickness direction (that is, in the rotation axis O direction); and a pair of substantially fan-like plate-shaped magnetic material members 42 and 42 that sandwich the permanent magnet piece 41 in the thickness direction. The permanent magnet pieces 41, ..., and 41 of the plurality of magnet pieces 31, ..., and 31 may be set to have the same magnetization directions.
That is, of the pair of stators 12 and 12 opposed to each other in the rotation axis O direction, one stator 12 is configured to be opposed only to N poles of the permanent magnet pieces 41, and the other stator 12 is configured to be opposed only to S poles of the permanent magnet pieces 41.

In the pair of magnetic material members 42 and 42 which cover one surface and the other surface in the thickness direction of the permanent magnet piece 41, a cross-section in the thickness direction is a substantially fan shape equivalent to that of the permanent magnet piece 41.
The permanent magnet piece 41 of the magnet piece 31 contained in the rotor frame 33 is sandwiched by a pair of circumferentially adjacent radial ribs 34, 34 in the circumferential direction.

The magnetic material piece 32 includes a plurality of magnetic material piece through holes 45, ..., 45 that penetrate in a direction parallel to the rotation axis O direction. Each of the magnetic material piece through holes 45 has, for example, an elongated hole shape whose cross-sectional shape in the rotation axis O direction has its longitudinal direction coinciding with the radial direction. The magnetic material piece through holes 45 are circumferentially arranged with a predetermined distance therebetween.

As described above, according to the axial gap motor 10 of the present embodiment, the permanent magnet pieces 41 of the magnet pieces 31 arranged in the circumferential direction of the rotor 11 in a manner alternating with the magnetic material pieces 32 are arranged with only the N poles opposed to one of the pair of stators 12 and 12 and only the S poles opposed to the other. Therefore, in application of current to the stator windings of the pair of stators 12 and 12, an optimal conduction phase for a magnet torque by the magnet piece 31 coincides with an optimal conduction phase for a reluctance torque by the magnetic material piece 32. As a result, it is possible to effectively utilize the magnet torque and the reluctance torque, to thereby effectively increase the output.
Furthermore, provision of the magnetic material members 42 and 42 sandwiching the poles of the permanent magnet piece 41 prevents a decrease in permeance of the permanent magnet piece 41. As a result, it is possible to suppress demagnetization of the permanent magnet piece 41, and also to further increase the reluctance torque.

Furthermore, with the magnetic material piece 32 being provided with the magnetic material piece through holes 45, it is possible to form magnetic paths penetrating the magnetic material piece 32 between the pair of stators 12 and 12. Therefore, it is possible to impart desired magnetic directionality to electric current flux by the stator windings of the stators 12. As a result, it is possible to increase the torque to be outputted. Furthermore, with the formation of the above magnetic paths, it is possible to perform waveform shaping of the electric current flux by the stator windings of the pair of stators 12 and 12 so as to suppress an abrupt change in magnetic resistance between the pair of stators 12 and 12. As a result, it is possible to suppress the occurrence of a torque ripple and a harmonic of an electric current flux waveform, to thereby reduce iron loss.

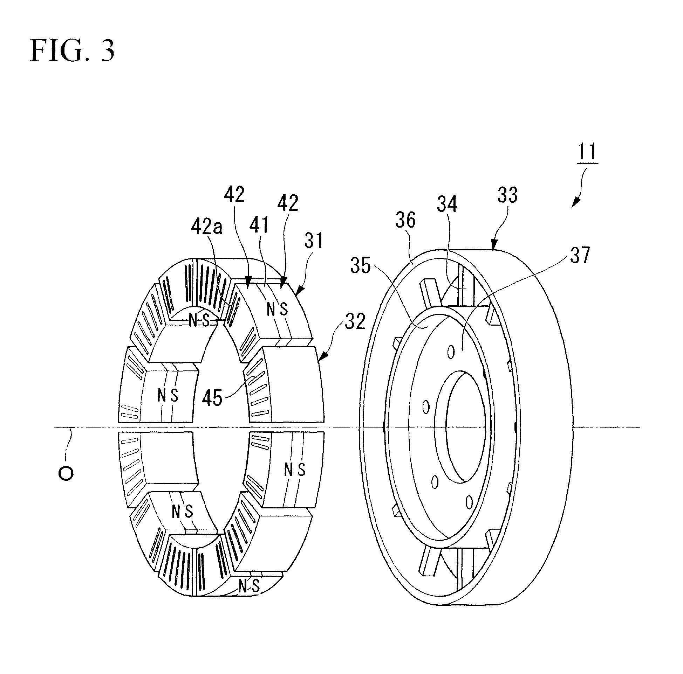

In the aforementioned embodiment, the magnetic material piece 32 is provided with the magnetic material piece through holes 45. However, the configuration is not limited to this. For example, as is the case with a first modified example shown in FIG. 3, there may be provided a plurality of through holes 42a, ..., 42a in the vicinity of circumferential end portions of the magnetic material member 42 of the magnet piece 31, the through holes 42a penetrating in the direction parallel to the rotation axis O direction. Each of the through holes 42a has an elongated hole shape whose cross-sectional shape in the rotation axis O direction has its longitudinal direction coinciding with the radial direction. The through holes 42a are circumferentially arranged with a predetermined distance therebetween.

According to the first modified example, with the through holes 42a being provided in the vicinity of circumferential end portions of the magnetic material member 42, it is possible to form magnetic paths penetrating each of the magnetic material members 42 between the pair of stators 12 and 12. Therefore, it is possible to impart desired magnetic directionality to electric current flux by the stator windings of the stators 12 and 12. As a result, it is possible to increase the torque to be outputted. Furthermore, with the formation of the above magnetic paths, it is possible to perform waveform shaping of the electric current flux by the stator windings of a pair of stators 12 and 12 so as to suppress an abrupt change in magnetic resistance between the pair of stators 12 and 12. As a result, it is possible to suppress the occurrence of a torque ripple and a harmonic of an electric current flux waveform, to thereby reduce iron loss.

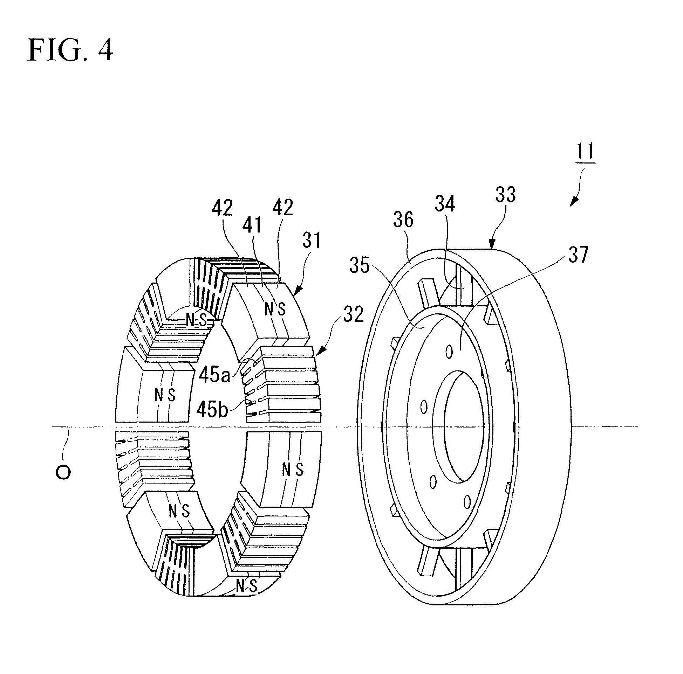

In the aforementioned embodiment, the magnetic material piece 32 is provided with the magnetic material piece through holes 45. However, the configuration is not limited to this. For example, as is the case with a second modified example shown in FIG. 4, the substantially fan-like plate-shaped magnetic material piece 32 may be provided with a plurality of outer circumferential side slits 45a or a plurality of inner circumferential side slits 45b that penetrate in the direction parallel to the rotation axis O direction, instead of the plurality of magnetic material piece through holes 45 in the aforementioned embodiment.
Each of the outer circumferential side slit 45a is formed of, for example, a recessed groove (for example, a recessed groove or the like formed by cutting away the magnetic material piece 32 from its outer circumferential surface inwardly in the radial direction) provided in the outer circumferential surface of the magnetic material piece 32. The depth directions of the recessed grooves extend inwardly in the radial direction of the magnetic material piece 32. The recessed grooves extend in the direction parallel to the rotation axis O direction.
Furthermore, each of the inner circumferential side slit 45b is formed of, for example, a recessed groove (for example, a recessed groove or the like formed by cutting away the magnetic material piece 32 from its inner circumferential surface outwardly in the radial direction) provided in the inner circumferential surface of the magnetic material piece 32. The depth directions of the recessed grooves extend outwardly in the radial direction of the magnetic material piece 32. The recessed grooves extend in the direction parallel to the rotation axis O direction.

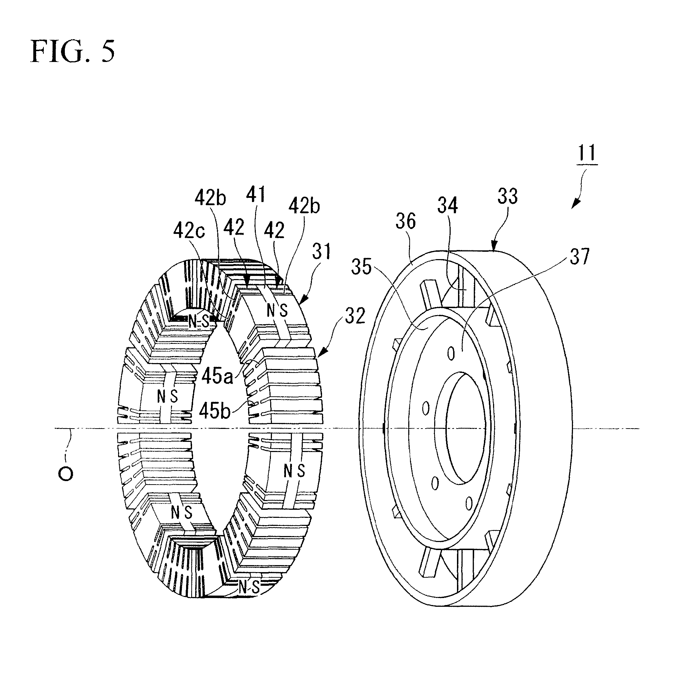

Furthermore, in the aforementioned first modified example, the magnetic material member 42 is provided with the through holes 42a. However, the configuration is not limited to this. For example, as is the case with a third modified example shown in FIG. 5, the substantially fan-like plate-shaped magnetic material member 42 may be provided with a plurality of outer circumferential side slits 42b or a plurality of inner circumferential side slits 42c that penetrate in the direction parallel to the rotation axis O direction, instead of the plurality of through holes 42a in the aforementioned first modified example.
Each of the outer circumferential side slit 42b is formed of, for example, a recessed groove (for example, a recessed groove or the like formed by cutting away the magnetic material member 42 from its outer circumferential surface inwardly in the radial direction) provided in the outer circumferential surface of the magnetic material member 42. The depth directions of the recessed grooves extend inwardly in the radial direction of the magnetic material member 42. The recessed grooves extend in the direction parallel to the rotation axis O direction.
Furthermore, each of the inner circumferential side slit 42c is formed of, for example, a recessed groove (for example, a recessed groove or the like formed by cutting away the magnetic material member 42 from its inner circumferential surface outwardly in the radial direction) provided in the inner circumferential surface of the magnetic material member 42. The depth directions of the recessed grooves extend outwardly in the radial direction of the magnetic material member 42. The recessed grooves extend in the direction parallel to the rotation axis O direction.

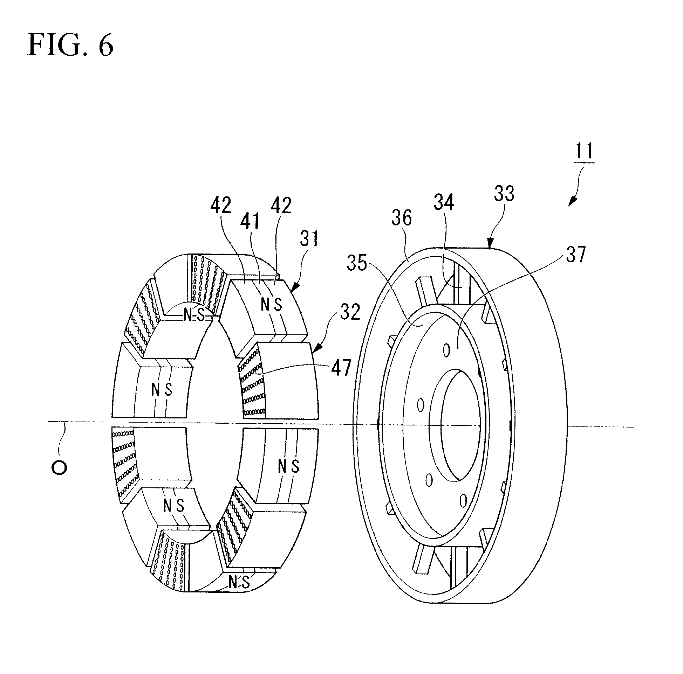

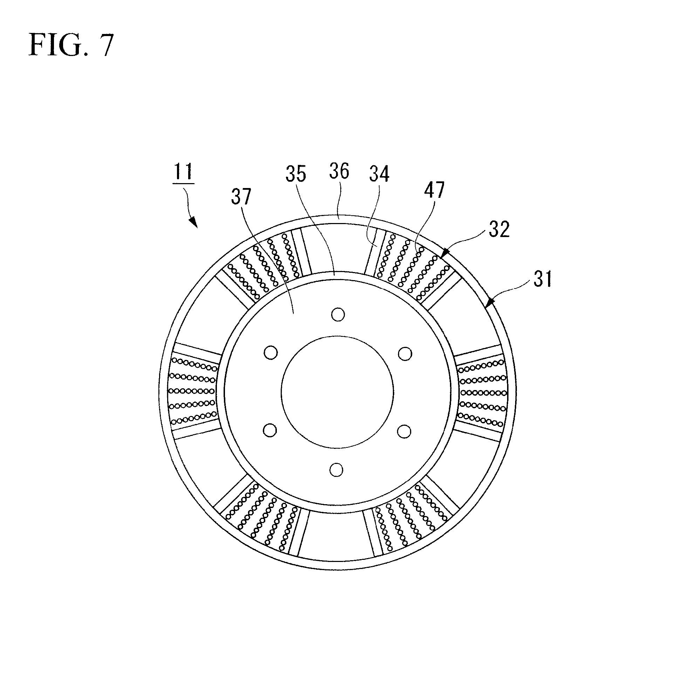

In the aforementioned embodiment, the magnetic material piece 32 is provided with the magnetic material piece through holes 45 with an elongated hole shape whose cross-sectional shape in the rotation axis O direction has its longitudinal direction coinciding with the radial direction. However, the configuration is not limited to this. For example, as is the case with a fourth modified example shown in FIG. 6 and FIG. 7, the substantially fan-like plate-shaped magnetic material piece 32 may be provided with a plurality of magnetic material piece through holes 47, ..., 47 that penetrate in the direction parallel to the rotation axis O direction, instead of the magnetic material piece through holes 45 in the aforementioned embodiment. In the fourth modified example, a cross-sectional shape in the rotation axis O direction of every magnetic material piece through holes 47 is a circular hole. The magnetic material piece through holes 47 are radially arranged with a predetermined distance therebetween.
In the aforementioned first modified example of the embodiment, the magnetic material member 42 of the magnet piece 31 may be provided with a plurality of through holes (not shown in the figures) that penetrate in the direction parallel to the rotation axis O direction and also are radially arranged with a predetermined distance therebetween, instead of the through holes 42a.

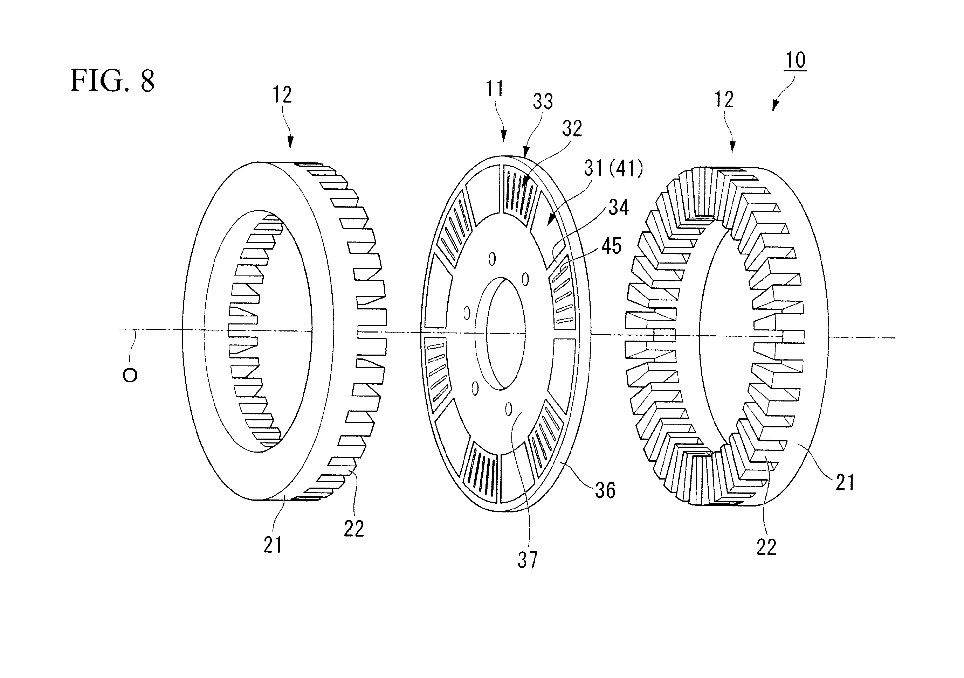

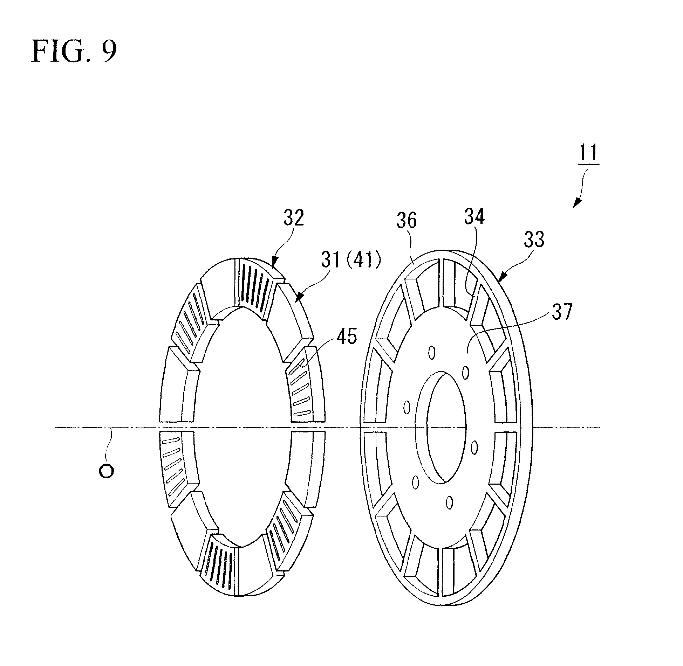

In the aforementioned embodiment, the magnet piece 31 includes: the permanent magnet piece 41; and the pair of magnetic material members 42 and 42 that sandwich the permanent magnet piece 41 in the thickness direction. However, the configuration is not limited to this. For example, as is the case with a fifth modified example shown in FIG. 8 and FIG. 9, the pair of magnetic material members 42 and 42 may be omitted. Alternately, only one of the pair of magnetic material members 42 and 42 may be omitted.
In the fifth modified example, the rotor frame 33 for example includes an inner circumferential side connection portion 37 and an outer circumferential side cylindrical portion 36 that are connected by means of a plurality of radial ribs 34, ..., 34 circumferentially arranged with a predetermined distance therebetween. The inner circumferential side connection portion 37, which is formed in an annular plate shape, is configured to be connected to an external drive shaft (for example, an input shaft of a transmission for a motor vehicle, or the like). That is, in the third modified example, the inner circumferential side cylindrical portion 35 in the aforementioned embodiment is omitted. In addition, the magnet pieces 31 and the magnetic material pieces 32 contained in the rotor frame 33 are sandwiched only by the connection portion 37 and the outer circumferential side cylindrical portion 36 in the radial direction.

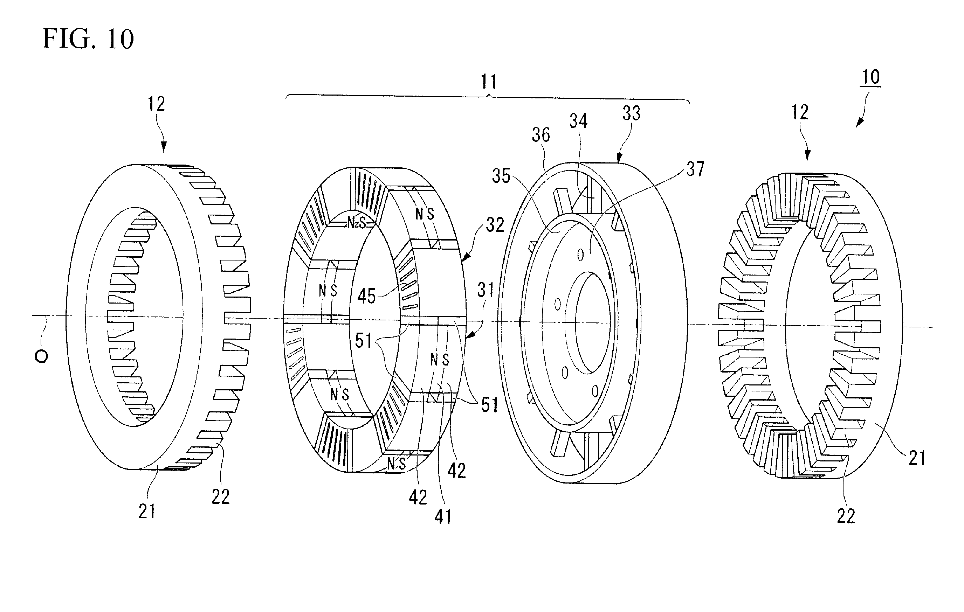

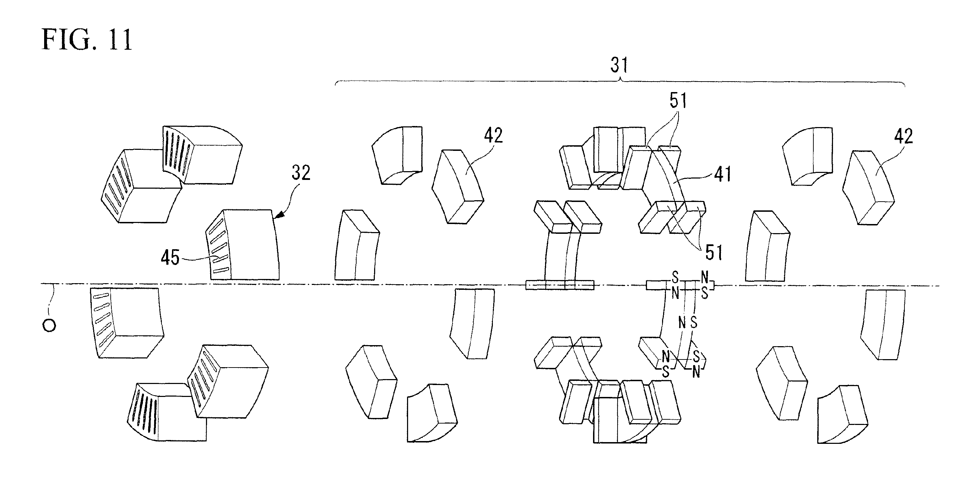

In the aforementioned embodiment, as is the case with a sixth modified example shown in FIG. 10 and FIG. 11, there may be provided a plurality of circumferentially arranged sub-permanent magnets 51, ..., and 51 that are arranged along circumferentially end portions of the permanent magnet pieces 41 of the magnet piece 31 and are magnetized in a direction orthogonal to the rotation axis O direction and the radial direction.
The plurality of circumferentially arranged sub-permanent magnets 51, ..., and 51 are arranged between the magnet pieces 31 and the magnetic material pieces 32 on one side and on the other side in the rotation axis O direction. That is, in the sixth modified example, each of the magnet pieces 31 includes, in addition to the permanent magnet piece 41 and the pair of magnetic material members 42 and 42, a pair of circumferentially arranged sub-permanent magnets 51 and 51 that sandwich the magnetic material members 42 in the circumferential direction. Furthermore, the magnet piece 31 is set so that the radial rib 34 of the rotor frame 33 is sandwiched by the circumferentially arranged sub-permanent magnet 51 arranged on one side in the direction parallel to the rotation axis O direction and the circumferentially arranged sub-permanent magnet 51 arranged on the other side in the direction parallel to the rotation axis O direction.

In the magnet piece 31, a pair of circumferentially arranged sub-permanent magnets 51 and 51 that are circumferentially opposed to each other via the magnetic material member 42, and a pair of circumferentially arranged sub-permanent magnets 51 and 51 that are opposed to each other in the direction parallel to the rotation axis O direction via the radial rib 34 of the rotor frame 33 are set to have magnetization directions different from one another.
The pair of circumferentially arranged sub-permanent magnets 51 and 51 that are arranged on one side in the direction parallel to the rotation axis O direction are arranged so that the poles with the same polarity as that on the one side of the permanent magnet piece 41, which is magnetized in the direction parallel to the rotation axis O direction, are opposed to each other. Furthermore, the pair of circumferentially arranged sub-permanent magnets 51 and 51 that are arranged on the other side in the direction parallel to the rotation axis O direction are arranged so that the poles with the same polarity as that on the other side of the permanent magnet piece 41, which is magnetized in the direction parallel to the rotation axis O direction, are opposed to each other.

That is, for example, with respect to the permanent magnet piece 41 that is magnetized as a north pole on one side in the direction parallel to the rotation axis O direction and as a south pole on the other side, the pair of circumferentially arranged sub-permanent magnets 51 and 51 that sandwich the magnetic material member 42 in the circumferential direction, on one side in the direction parallel to the rotation axis O direction, are arranged so that their north poles are opposed to each other in the circumferential direction. Furthermore, the pair of circumferentially arranged sub-permanent magnets 51 and 51 that sandwich the magnetic material member 42 in the circumferential direction, on the other side in the direction parallel to the rotation axis O direction, are arranged so that their south poles are opposed to each other in the circumferential direction.

According to the axial gap motor 10 of the sixth modified example, due to the magnetic flux lens effect by a so-called Halbach arrangement of permanent magnets, the magnetic flux lines of the permanent magnet pieces 41 and the circumferentially arranged sub-permanent magnets 51 and 51 converge. Thereby, the effective magnetic flux that interlinks the windings of the stators 12 and 12 is relatively increased.

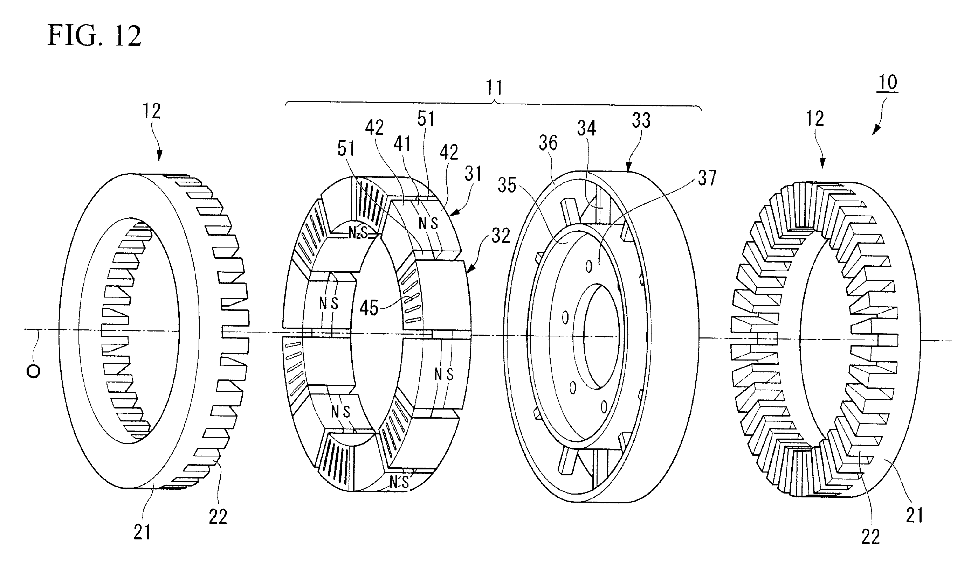

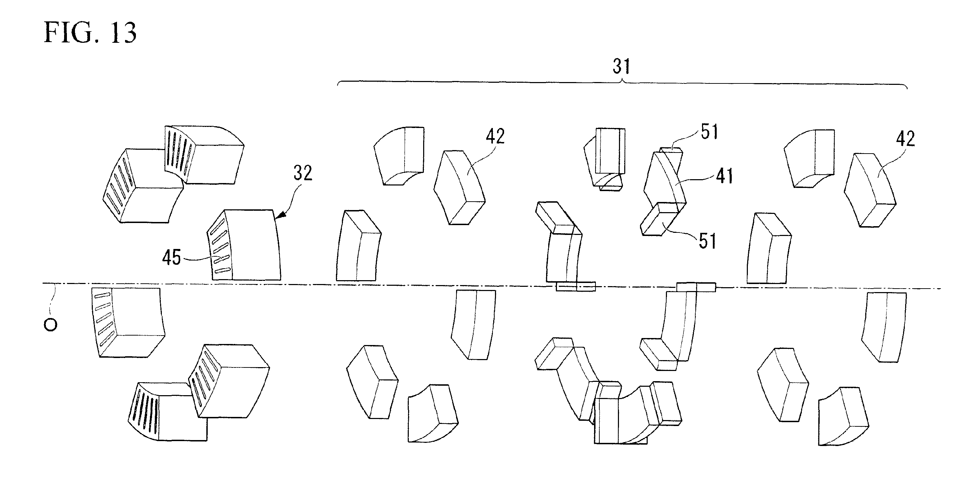

In the sixth modified example, as shown for example in FIG. 12 and FIG. 13, in the magnet piece 31, the circumferentially arranged sub-permanent magnet 51 on either one side in the circumferential direction may be omitted from the pair of circumferentially arranged sub-permanent magnets 51 and 51 arranged on one side in the direction parallel to the rotation axis O direction, while at the same time the circumferentially arranged sub-permanent magnet 51 on either the other side in the circumferential direction may be omitted from the pair of circumferentially arranged sub-permanent magnets 51 and 51 arranged on the other side in the direction parallel to the rotation axis O direction.

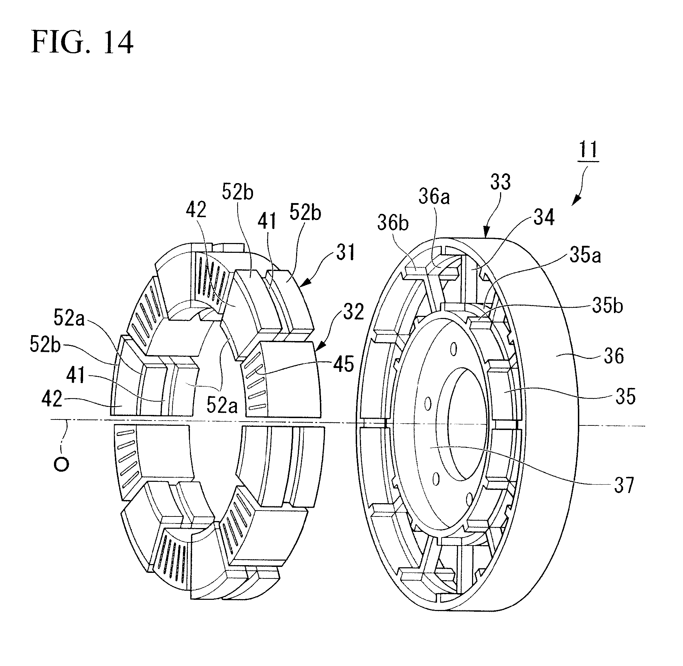

In the aforementioned embodiment, as is the case, for example, with a seventh modified example shown in FIG. 14, there may be provided a plurality of inner circumferentially arranged sub-permanent magnets 52a and outer circumferentially arranged sub-permanent magnets 52b, the sub-permanent magnets 52a, 52b being arranged along radial end portions of the permanent magnet pieces 41 of the magnet pieces 31 and being magnetized radially.
The plurality of the inner circumferentially arranged sub-permanent magnets 52a and the outer circumferentially arranged sub-permanent magnets 52b are arranged so as to sandwich the magnetic material members 42 of the magnet pieces 31 in the radial direction on one side and on the other side in the rotation axis O direction.
That is, in the seventh modified example, the magnet piece 31 includes, in addition to the permanent magnet piece 41 and the pair of magnetic material members 42 and 42, the inner circumferentially arranged sub-permanent magnet 52a and the outer circumferentially arranged sub-permanent magnet 52b that sandwich each of the magnetic material members 42 in the radial direction.

In the seventh modified example, as shown for example in FIG. 14, the rotor frame 33 includes: an inner circumferential side circumferential direction protruding ridge 35a; inner circumferential side axial direction protruding ridges 35b; an outer circumferential side circumferential direction protruding ridge 36a; and outer circumferential side axial direction protruding ridges 36b, in addition to a plurality of radial ribs 34, ..., 34 circumferentially arranged with a predetermined distance therebetween, an inner circumferential side cylindrical portion 35, an outer circumferential side cylindrical portion 36, and a connection portion 37.

That is, on an outer circumferential surface of the inner circumferential side cylindrical portion 35, there are provided: an inner circumferential side circumferential direction protruding ridges 35a that protrudes outwardly in the radial direction along the central portion in the rotation axis O direction and also extends in the circumferential direction; and a plurality of inner circumferential side axial direction protruding ridges 35b, ..., 35b that protrude outwardly in the radial direction at positions circumferentially spaced a predetermined distance apart and also extend in parallel with the rotation axis O direction.

Furthermore, on an inner circumferential surface of the outer circumferential side cylindrical portion 36, there are provided an outer circumferential side circumferential direction protruding ridge 36a and a plurality of outer circumferential side axial direction protruding ridges 36b, ..., 36b. Here, the outer circumferential side circumferential direction protruding ridge 36a protrudes inwardly in the radial direction along the central portion in the rotation axis O direction so as to be opposed to the inner circumferential side circumferential direction protruding ridge 35a and also extends in the circumferential direction. The plurality of outer circumferential side axial direction protruding ridges 36b, ..., 36b protrude inwardly in the radial direction at positions circumferentially spaced a predetermined distance apart so as to be opposed to the inner circumferential side axial direction protruding ridges 35b, ..., 35b and also extend in parallel with the rotation axis O direction.

The protruding ridges 35a, 35b are equal in protrusion height in the radial direction. The protruding ridges 36a, 36b are equal in protrusion height in the radial direction.
Each of the radial ribs 34 is arranged so as to connect an intersection portion between the protruding ridges 35a, 35b with an intersection portion between the protruding ridges 36a, 36b.

On one side and the other side in the direction parallel to the rotation axis O direction, out of the inner circumferentially arranged sub-permanent magnet 52a and the outer circumferentially arranged sub-permanent magnet 52b that form a pair in the radial direction, the inner circumferentially arranged sub-permanent magnet 52a is sandwiched by the circumferentially adjacent inner circumferential side axial direction protruding ridges 35b, 35b in the circumferential direction. Furthermore, the outer circumferentially arranged sub-permanent magnet 52b is sandwiched by the circumferentially adjacent outer circumferential side axial direction protruding ridges 36b, 36b in the circumferential direction.
The inner circumferentially arranged sub-permanent magnet 52a, 52a that are opposed to each other in the direction parallel to the rotation axis O direction sandwich the inner circumferential side circumferential direction protruding ridge 35a in this direction. Furthermore, the outer circumferentially arranged sub-permanent magnets 52b, 52b that are opposed to each other in the direction parallel to the rotation axis O direction sandwich the outer circumferential side circumferential direction protruding ridge 36a in this direction.

In the magnet piece 31, the pair composed of the inner circumferentially arranged sub-permanent magnet 52a and the outer circumferentially arranged sub-permanent magnet 52b that are opposed to each other via the magnetic material member 42 are set to have magnetization directions different from one another. Furthermore, the inner circumferentially arranged sub-permanent magnets 52a, 52a that are opposed to each other in the direction parallel to the rotation axis O direction via the inner circumferential side circumferential direction protruding ridge 35a of the rotor frame 33 are also set to have magnetization directions different from one another. Furthermore, the outer circumferentially arranged sub-permanent magnets 52b, 52b that are opposed to each other in the direction parallel to the rotation axis O direction via the outer circumferential side circumferential direction protruding ridge 36a of the rotor frame 33 are also set to have magnetization directions different from one another.
The pair of the inner circumferentially arranged sub-permanent magnet 52a and the outer circumferentially arranged sub-permanent magnet 52b that are arranged on one side in the direction parallel to the rotation axis O direction are arranged so that the poles with the same polarity as that on the one side of the permanent magnet piece 41, which is magnetized in the direction parallel to the rotation axis O direction, are opposed to each other. Furthermore, the pair of the inner circumferentially arranged sub-permanent magnet 52a and the outer circumferentially arranged sub-permanent magnet 52b that are arranged on the other side in the direction parallel to the rotation axis O direction are arranged so that the poles with the same polarity as that on the other side of the permanent magnet piece 41, which is magnetized in the direction parallel to the rotation axis O direction, are opposed to each other.

That is, for example, with respect to the permanent magnet piece 41 that is magnetized as a north pole on one side in the direction parallel to the rotation axis O direction and as a south pole on the other side, the pair of the inner circumferentially arranged sub-permanent magnet 52a and the outer circumferentially arranged sub-permanent magnet 52b that sandwich the magnetic material member 42 in the radial direction, on one side in the direction parallel to the rotation axis O direction, are arranged so that their north poles are opposed to each other in the radial direction. Furthermore, the pair of the inner circumferentially arranged sub-permanent magnet 52a and the outer circumferentially arranged sub-permanent magnet 52b that sandwich the magnetic material member 42 in the radial direction, on the other side in the direction parallel to the rotation axis O direction, are arranged so that their south poles are opposed to each other in the radial direction.

According to the axial gap motor 10 of the seventh modified example, due to the magnetic flux lens effect by a so-called Halbach arrangement of permanent magnets, the magnetic flux lines of the permanent magnet pieces 41, and the inner circumferentially arranged sub-permanent magnets 52a and the outer circumferentially arranged sub-permanent magnets 52b converge. As a result, the effective magnetic flux that interlinks the windings of the stators 12 and 12 is relatively increased.
In the seventh modified example, in the magnet piece 31, one of the inner circumferentially arranged sub-permanent magnet 52a and the outer circumferentially arranged sub-permanent magnet 52b arranged on one side in the direction parallel to the rotation axis O direction may be omitted, while at the same time, the other one of the inner circumferentially arranged and outer circumferentially arranged sub-permanent magnets 52a, 52b arranged on the other side in the direction parallel to the rotation axis O direction may be omitted.

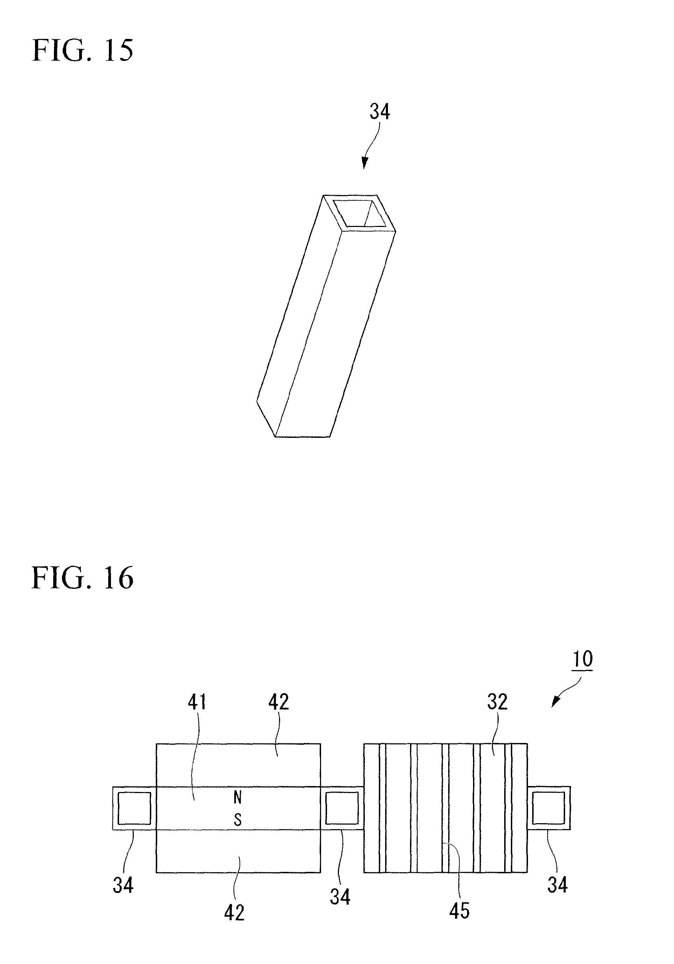

In the aforementioned embodiment and the aforementioned first to fourth modified examples shown in FIG. 1 to FIG. 7, the radial rib 34 of the rotor frame 33 made of a non-magnetic material has a pillar shape. However, the configuration is not limited to this. For example, as is the case with an eighth modified example shown in FIG. 15, the radial rib 34 may be made of a non-magnetic material that is formed into a hollow tube extending in the radial direction.

According to the axial gap motor 10 of the aforementioned eighth modified example of the embodiment shown for example in FIG. 16, there is arranged a tubular radial rib 34 that extends in the radial direction between the permanent magnet piece 41 and the magnetic material piece 32 that are circumferentially adjacent to each other.
According to the axial gap motor 10 of the eighth modified example, it is possible to improve the magnetic insulation ability while securing desired rigidity as a structure. Therefore, it is possible to effectively utilize the magnetic flux of the permanent magnet piece 41, to reduce eddy current loss by the armature magnetic flux produced when current is applied, to increase torque potential, and to prevent excessive increase in temperature due to Joule heating. As a result, it is possible to improve operating efficiency of the axial gap motor 10.

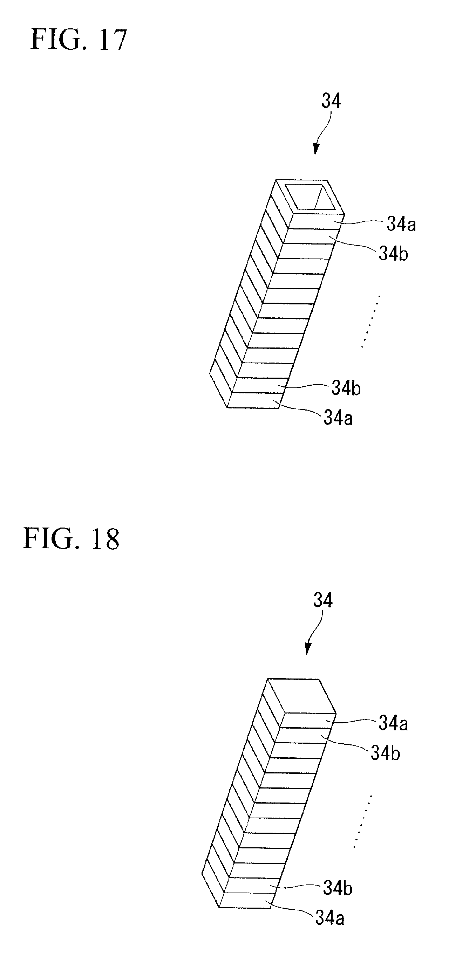

Furthermore, in the eighth modified example, the radial rib 34 is simply made of a non-magnetic material formed into a hollow shape. However, the configuration is not limited to this. For example, as is the case with a ninth modified example shown in FIG. 17, the radial rib 34 may be formed of a stacked layer structure where electrically insulating non-magnetic materials and electrically non-insulating non-magnetic materials are stacked. For example, in the ninth modified example shown in FIG. 17, the tubular radial rib 34 is made of, for example, electrically non-insulating metal-based square-annular non-magnetic materials (for example, coppers or the like) 34a and electrically insulating square-annular non-magnetic materials 34b alternately stacked in the radial direction.
According to the ninth modified example, the radial rib 34 has a stacked layer structure where the electrically non-insulating non-magnetic materials 34a and the electrically insulating non-magnetic materials 34b are stacked. Thereby, it is possible to further reduce eddy current loss by the armature magnetic flux produced when current is applied. As a result, it is possible to prevent excessive increase in temperature due to Joule heating.

In the ninth modified example, the radial rib 34 has a hollow shape. However, the configuration is not limited to this. If a radial rib 34 is to be formed of a stacked layer structure where electrically insulating non-magnetic materials and electrically non-insulating non-magnetic materials are stacked, the radial rib 34 may be formed in a pillar shape extending in the radial direction, as is the case with a tenth modified example shown in FIG. 18. In the tenth modified example, the pillar-shaped radial rib 34 is made of, for example, electrically non-insulating metal-based plate-shaped non-magnetic materials 34a (for example, coppers or the like) and electrically insulating plate-shaped non-magnetic materials 34b alternately stacked in the radial direction.
According to the tenth modified example, the pillar-shaped radial rib 34 is formed of a stacked layer structure where the electrically non-insulating non-magnetic materials 34a and the electrically insulating non-magnetic materials 34b are stacked. Thereby, it is possible to improve the rigidity as a structure while suppressing the occurrence of eddy current loss by the armature magnetic flux produced when current is applied.

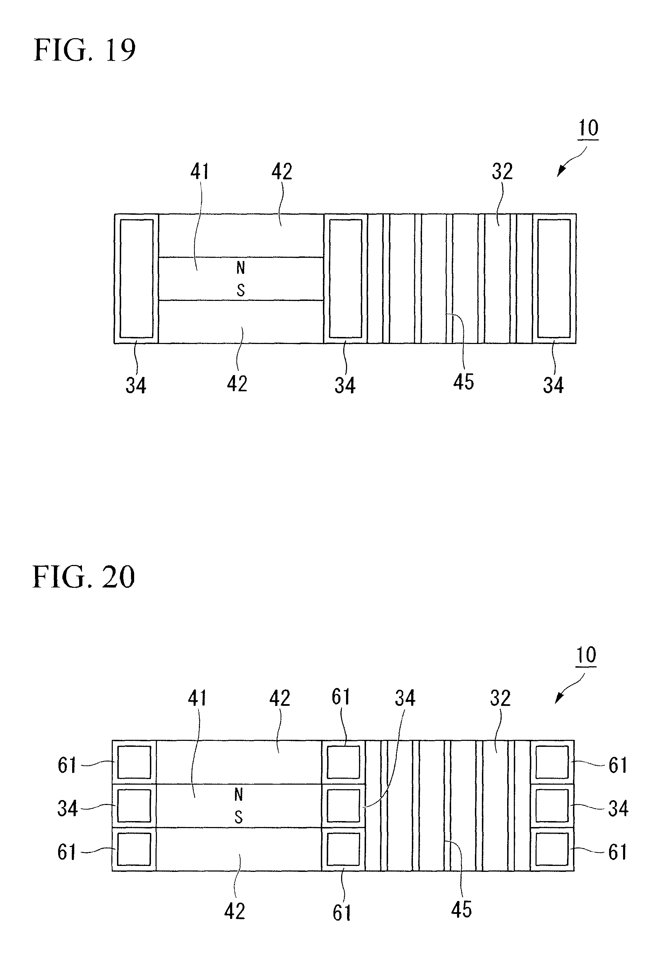

In the aforementioned eighth modified example to tenth modified example shown for example in FIG. 15 to FIG. 18, the radial direction width of the radial rib 34 is equal to the radial direction width of the permanent magnet piece 41. However, the configuration is not limited to this. For example, as is the case with an eleventh modified example shown in FIG. 19, the radial direction width of the radial rib 34 may be formed greater than the radial direction width of the permanent magnet piece 41.

According to an axial gap motor 10 of the aforementioned eleventh modified example according to the eighth modified example shown for example in FIG. 19, the radial direction width of the radial rib 34 is equal to the total radial direction widths of a permanent magnet piece 41 and a pair of magnetic material members 42 and 42 that sandwich the permanent magnet piece 41 in the thickness direction.
According to the axial gap motor 10 of the eleventh modified example, the radial rib 34 is arranged between the permanent magnet piece 41 and the magnetic material piece 32 that are circumferentially adjacent to each other, and between the magnetic material member 42 and the magnetic material piece 32 that are circumferentially adjacent to each other. Here, the radial rib 34 is made of at least either of a radially extending tubular structure and a radially extending stacked layer structure where the electrically non-insulating non-magnetic materials 34a and the electrically insulating non-magnetic materials 34b are stacked in the radial direction. As a result, it is possible to further improve the rigidity as a structure.

In the aforementioned embodiment and first to fourth modified examples shown for example in FIG. 1 to FIG. 7, and also in the aforementioned eighth to tenth modified examples shown in for example in FIG. 15 to FIG. 18, the radial rib 34 is provided between the permanent magnet piece 41 and the magnetic material piece 32. However, the configuration is not limited to this. There may be further provided spacer members 61 made of a non-magnetic material, each of the spacer members 61 being arranged, on both end portions in the rotation axis O direction of the radial rib 34, between the magnetic material member 42 and the magnetic material piece 32 that are circumferentially adjacent to each other.
In a twelfth modified example shown for example in FIG. 20, a spacer member 61 is made of a non-magnetic material that is formed into a hollow tube extending in the radial direction.
The spacer member 61 is not limited to one simply made of a non-magnetic material formed into a hollow shape. For example, the spacer member 61 may be formed of a stacked layer structure where electrically insulating non-magnetic materials and electrically non-insulating non-magnetic materials are alternately stacked in the radial direction. If a spacer member 61 is to be formed of a stacked layer structure where electrically insulating non-magnetic materials and electrically non-insulating non-magnetic materials are stacked, the spacer member 61 may be formed in a pillar shape extending in the radial direction.

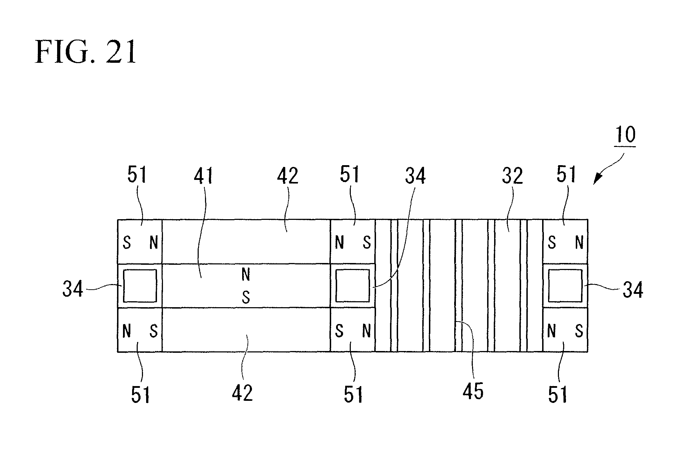

In the sixth modified example and the seventh modified example shown for example in FIG. 10 to FIG. 14, the radial rib 34 of the rotor frame 33 made of a non-magnetic material has a pillar shape, the radial rib 34 being sandwiched by the permanent magnet piece 41 and the magnetic material piece 32 in the circumferential direction and also being sandwiched by the pair of circumferentially arranged sub-permanent magnets 51 and 51 in the rotation axis O direction. However, the configuration is not limited to this. For example, as is the case with a thirteenth modified example shown in FIG. 21, the radial rib 34 may be made of a non-magnetic material that is formed into a hollow tube extending in the radial direction.
The radial rib 34 is not limited to one simply made of a non-magnetic material formed into a hollow shape. For example, the radial rib 34 may be formed of a stacked layer structure where electrically insulating non-magnetic materials 34b and electrically non-insulating non-magnetic materials 34a are alternately stacked in the radial direction.
If a radial rib 34 is to be formed of a stacked layer structure where electrically insulating non-magnetic materials and electrically non-insulating non-magnetic materials are stacked, the radial rib 34 may be formed in a pillar shape extending in the radial direction.

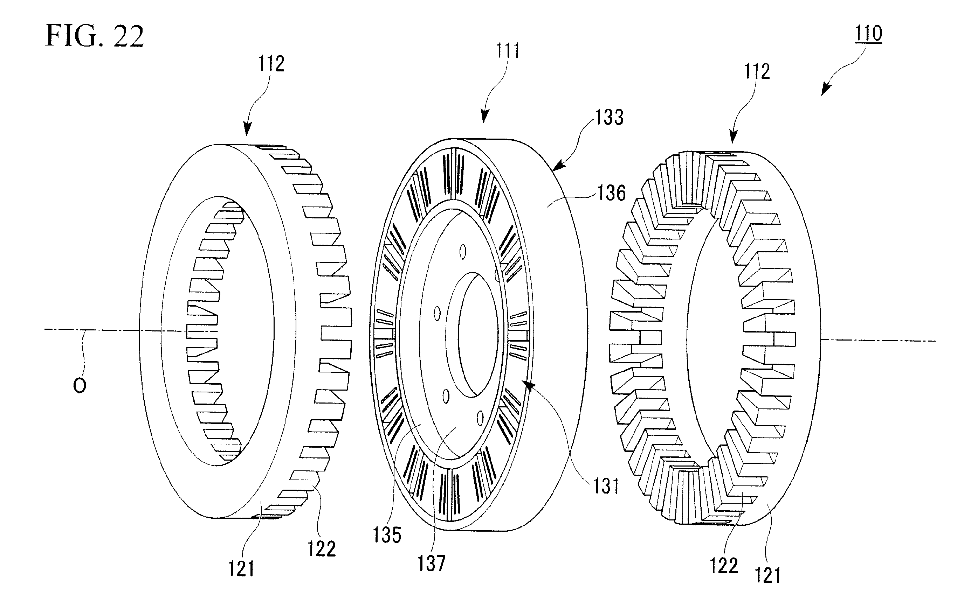

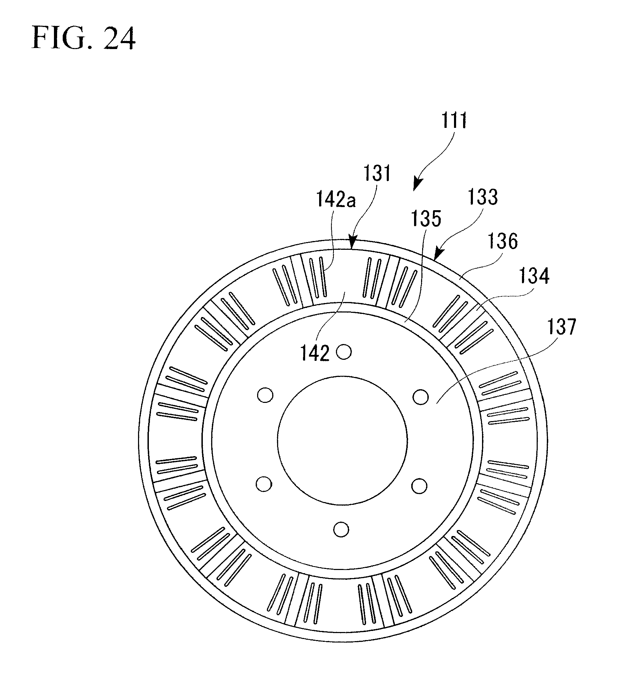

Hereunder is a description of an axial gap motor according to a second embodiment of the present invention with reference to the drawings.
An axial gap motor 110 according to the present embodiment includes a substantially annular rotor 111 and a pair of stators 112 and 112 as shown for example in FIG. 22 to FIG. 24. Here, the substantially annular rotor 111 is provided rotatably about a rotation axis O of the axial gap motor 110. The pair of stators 112 and 112 are oppositely arranged so as to sandwich the rotor 111 in the rotation axis O direction. The stator 112 has stator windings with a plurality of phases that generate a rotating magnetic field for rotating the rotor 111.

The axial gap motor 110 is mounted as a drive source in, for example, a motor vehicle such as a hybrid motor vehicle or an electric motor vehicle, and has its output shaft connected to an input shaft of a transmission (not shown in the figures). Thereby, the driving force of the axial gap motor 110 is transmitted to the drive wheels (not shown in the figures) of the motor vehicle via the transmission.

When a driving force is transmitted to the axial gap motor 110 from the drive wheels in deceleration of the vehicle, the axial gap motor 110 functions as a generator, to thereby generate a so-called regenerative braking force. As a result, the axial gap motor 110 recovers the motive energy of the vehicle body as electric energy (regenerative energy). Furthermore, for example in a hybrid motor vehicle, when the rotation shaft of the axial gap motor 110 is coupled to a crankshaft of an internal combustion engine (not shown in the figures), the axial gap motor 110 also functions as a generator even if an output of the internal combustion engine is transmitted to the axial gap motor 110. As a result, the axial gap motor 110 produces electric power energy.

As shown for example in FIG. 22, each of the stators 112 includes: a substantially annular plate-shaped yoke portion 121; a plurality of teeth 122, ..., and 122; and stator windings (not shown in the figure) each fitted between appropriate teeth 122 and 122. Here, the teeth 122 protrude toward the rotor 111 from positions on an opposing surface of the yoke portion 121 that is opposed to the rotor 111 and also extends in the radial direction, the positions being circumferentially spaced apart by a predetermined distance along the rotation axis O direction.

Each of the stators 112 is, for example, of 6N type with six main poles (for example, U+, V+, W+, U-, V-, W-). It is configured such that a U+, V+, W+ poles of one stator 112 are respectively opposed to a U-, V-, W- poles of the other stator 112 in the rotation axis O direction.
For example, in a pair of stators 112 and 112 opposed to each other in the rotation axis O direction, three teeth 122, 122 and 122 of one stator 112 corresponding to a U+, V+, W+ poles are set to be opposed in the rotation axis O direction to three teeth 122, 122 and 122 of the other stator 112 corresponding to a U-, V-, W- poles. That is, in a pair of stators 112 and 112 opposed to each other in the rotation axis O direction, a current-carrying state of the teeth 122 of one stator 112 is set to be a reversal of a current-carrying state of the teeth 122 of the other stator 112 in terms of electric angle.

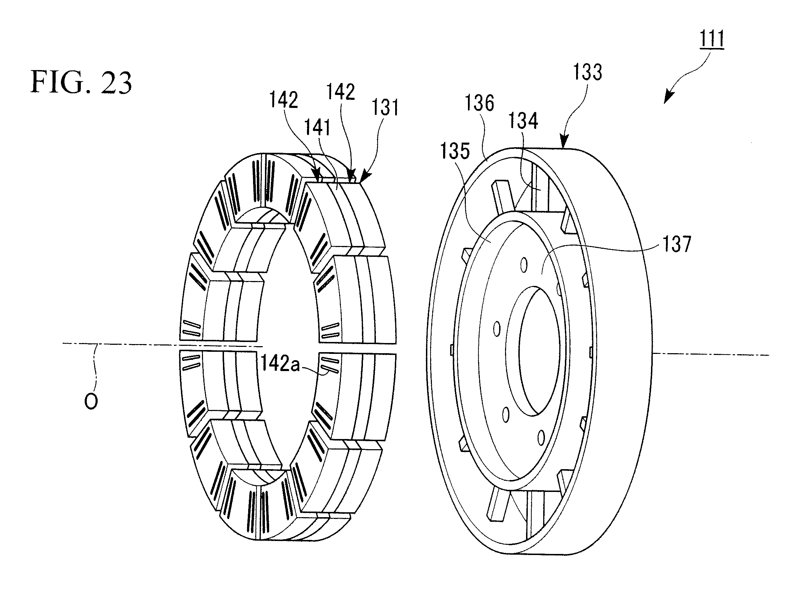

As shown for example in FIG. 23, the rotor 111 includes: a plurality of magnet pieces 131, ..., and 131; and a rotor frame 133 made of a non-magnetic material that contains the magnet pieces 131, ..., and 131.

The rotor frame 133 includes: an inner circumferential side cylindrical portion 135; an outer circumferential side cylindrical portion 136; and a connection portion 137. Here, the inner circumferential side cylindrical portion 35 is connected by means of a plurality of radial ribs 134, ..., 134 that are circumferentially arranged with a predetermined distance spaced apart. Furthermore, the connection portion 137 is formed in an annular plate shape that protrudes inwardly from an inner circumferential surface of the inner circumferential side cylindrical portion 135, and is connected to an external drive shaft (for example, an input shaft of a transmission for a motor vehicle, or the like).
The plurality of magnet pieces 131 contained in the rotor frame 133 are sandwiched by the inner circumferential side cylindrical portion 135 and the outer circumferential side cylindrical portion 136 in the radial direction, and are also arranged so as to be circumferentially adjacent to each other with the radial rib 134 interposed therebetween.

The magnet piece 131 includes: a substantially fan-like plate-shaped permanent magnet piece 41 magnetized in a thickness direction (that is, in the direction parallel to the rotation axis O direction); and a pair of substantially fan-like plate-shaped magnetic material members 142 and 142 that sandwich the permanent magnet piece 141 in the thickness direction. The permanent magnet pieces 141 and 141 of the circumferentially adjacent magnet pieces 131 and 131 are set so that their magnetization directions are different from each other.
That is, the magnet piece 131 provided with a permanent magnet piece 141 with the N pole on one side in the direction parallel to the rotation axis O direction is circumferentially adjacent to the magnet piece 131 provided with a permanent magnet piece 141 with the S pole on the one side in the direction parallel to the rotation axis O.

In the pair of magnetic material members 142 and 142 which cover one surface and the other surface in the thickness direction of the permanent magnet piece 141, a cross-section in the thickness direction is a substantially fan shape equivalent to that of the permanent magnet piece 141.
Furthermore, there are provided a plurality of through holes 142a, ..., 142a in the vicinity of circumferential end portions of the magnetic material member 142 of the magnet piece 131, the through holes 142a penetrating in the direction parallel to the rotation axis O direction. Each of the through holes 142a has an elongated hole shape whose cross-sectional shape in the rotation axis O direction has its longitudinal direction coinciding with the radial direction. The plurality of through holes 142a, ..., 142a are circumferentially arranged with a predetermined distance therebetween.
The permanent magnet piece 141 of the magnet piece 131 contained in the rotor frame 133 is sandwiched by a pair of circumferentially adjacent radial ribs 134, 134 in the circumferential direction.

As described above, according to the axial gap motor 110 of the second embodiment, the magnet piece 131 is provided with the magnetic material members 142 and 142 that sandwich the magnetic poles of the permanent magnet piece 141. This prevents decrease in permeance of the permanent magnet piece 141. As a result, it is possible to suppress demagnetization of the permanent magnet piece 141, and also to increase the reluctance torque.

Furthermore, with the through holes 142a being provided in the vicinity of circumferential end portions of the magnetic material member 142, it is possible to form magnetic paths penetrating the magnetic material member 142 between the pair of stators 112 and 112. Therefore, it is possible to impart desired magnetic directionality to electric current flux by the stator windings of the stators 112 and 112. As a result, it is possible to increase the torque to be outputted. Furthermore, with the formation of the above magnetic paths, it is possible to perform waveform shaping of the electric current flux by the stator windings of the pair of stators 112 and 112 so as to suppress an abrupt change in magnetic resistance between the pair of stators 112 and 112. As a result, it is possible to suppress the occurrence of a torque ripple and a harmonic of an electric current flux waveform, to thereby reduce iron loss.

In the aforementioned embodiment, the radial rib 134 is provided between the radially adjacent magnet pieces 131 and 131 in the rotor frame 133. However, the configuration is not limited to this. For example, a gap may be provided instead of the radial rib 134.

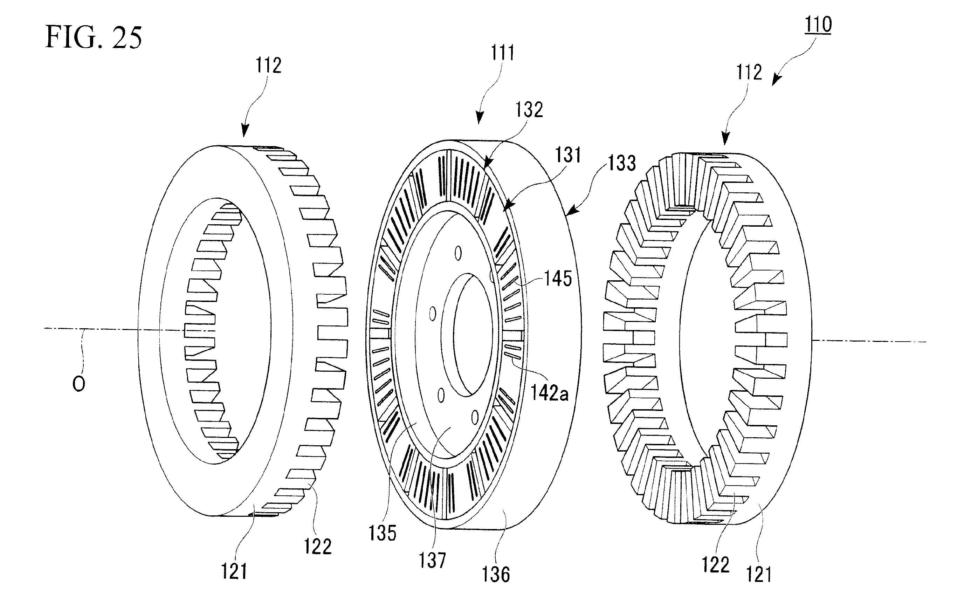

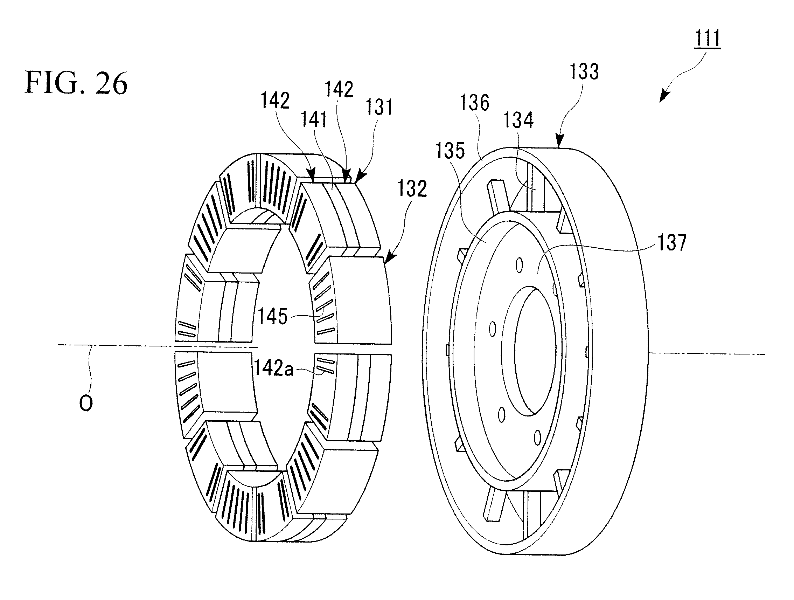

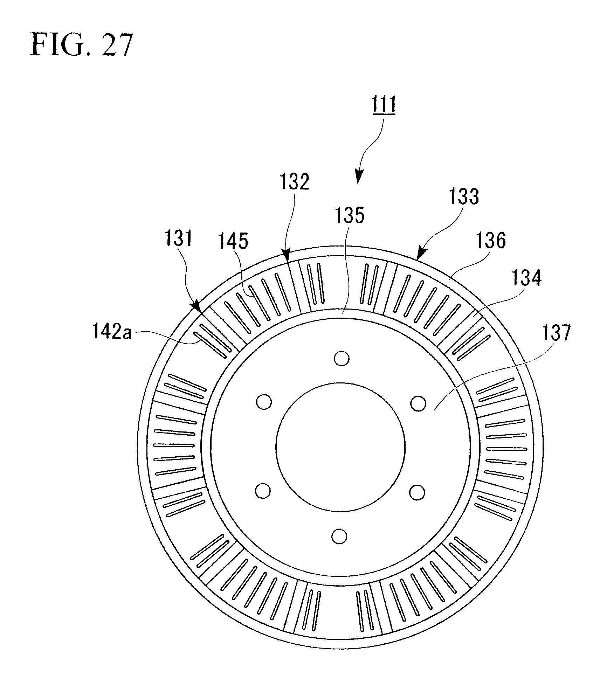

In the aforementioned embodiment, the rotor 111 includes the plurality of magnet pieces 131, ..., and 131 and the rotor frame 133 made of a non-magnetic material that contains the magnet pieces 131, ..., and 131. However, the configuration is not limited to this. For example, as is the case with a first modified example shown in FIG. 25 to FIG. 27, the rotor 111 may be made of: a plurality of magnet pieces 131, ..., and 131; a plurality of magnetic material pieces 132, ..., and 132; and a rotor frame 133 made of a non-magnetic material, and besides, the magnet pieces 131 and the magnetic material pieces 132 may be contained in the rotor frame 133 in a state of being alternately arranged in the circumferential direction.

In the first modified example, the magnet pieces 131 and the magnetic material pieces 132 contained in the rotor frame 133 are arranged so as to be sandwiched by the inner circumferential side cylindrical portion 135 and the outer circumferential side cylindrical portion 136 in the radial direction and to be circumferentially adjacent to each other via the radial rib 134.
The magnetic material piece 132 includes a plurality of magnetic material piece through holes 145, ..., 145 that penetrate in the direction parallel to the rotation axis O direction. Each of the magnetic material piece through holes 145 has, for example, an elongated hole shape whose cross-sectional shape in the rotation axis O direction has its longitudinal direction coinciding with the radial direction. The magnetic material piece through holes 45 are circumferentially arranged with a predetermined distance therebetween.

In the first modified example, the permanent magnet pieces 141, ..., and 141 of the magnet pieces 131, ..., and 131 contained in the rotor frame 133 may be set to have the same magnetization direction.

According to the axial gap motor 110 of the first modified example, with the magnetic material piece through holes 145 being provided in the magnetic material pieces 132 that are arranged alternately with the magnet pieces 131 in the circumferential direction, it is possible to form magnetic paths penetrating the magnetic material piece 132 between the pair of stators 112 and 112. Therefore, it is possible to more suitably impart desired magnetic directionality to electric current flux by the stator windings of the stators 112. As a result, it is possible to increase the torque to be outputted. Furthermore, with the formation of the above magnetic paths, it is possible to perform waveform shaping of the electric current flux by the stator windings of the pair of stators 112 and 112 so as to suppress an abrupt change in magnetic resistance between the pair of stators 112 and 112. As a result, it is possible to suppress the occurrence of a torque ripple and a harmonic of an electric current flux waveform, to thereby reduce iron loss.

In the case where the permanent magnet pieces 141 of the magnet pieces 131 have only the N poles opposed to one of the pair of stators 112 and 112 and have only the S poles opposed to the other, an optimal conduction phase for a magnet torque by the magnet piece 131 coincides with an optimal conduction phase for a reluctance torque by the magnetic material piece 132, in application of current to the stator windings of the pair of stators 112 and 112. As a result, it is possible to effectively utilize the magnet torque and the reluctance torque, to thereby effectively increase an output.

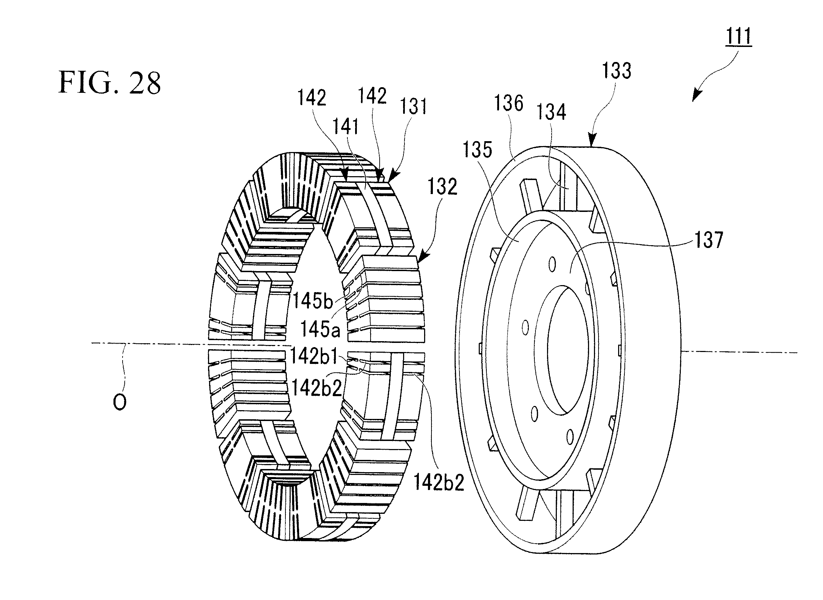

In the aforementioned first embodiment, the magnetic material member 142 of the magnet piece 131 is provided with the through holes 142a. In addition, in the aforementioned first modified example of the first embodiment, the magnetic material piece 132 is provided with the magnetic material piece through holes 145. However, the configurations are not limited to these. For example, as is the case with a second modified example shown in FIG. 28, the magnetic material member 142 may be provided with inner circumferential side slits 142b1 or outer circumferential side slits 142b2 that penetrate in the direction parallel to the rotation axis O direction, instead of the through holes 142a. Furthermore, the magnetic material piece 132 may be provided with a plurality of outer circumferential side slits 145a or a plurality of inner circumferential side slits 145b that penetrate in the direction parallel to the rotation axis O direction, instead of the magnetic material piece through holes 145.

Here, each of the inner circumferential side slits 142b1 is formed of, for example, a recessed groove (for example, a recessed groove or the like formed by cutting away the magnetic material member 142 from its inner circumferential surface outwardly in the radial direction) provided in the inner circumferential surface of the magnetic material member 142. The depth directions of the recessed grooves extend outwardly in the radial direction of the magnetic material member 142. The recessed grooves extend in the direction parallel to the rotation axis O direction.
Each of the outer circumferential side slits 142b2 is formed of, for example, a recessed groove (for example, a recessed groove or the like formed by cutting away the magnetic material member 142 from its outer circumferential surface inwardly in the radial direction) provided in the outer circumferential surface of the magnetic material member 142. The depth directions of the recessed grooves extend inwardly in the radial direction of the magnetic material member 142. The recessed grooves extend in the direction parallel to the rotation axis O direction.
Each of the outer circumferential side slits 145a is formed of, for example, a recessed groove (for example, a recessed groove or the like formed by cutting away the magnetic material piece 132 from its outer circumferential surface inwardly in the radial direction) provided in the outer circumferential surface of the magnetic material piece 132. The depth directions of the recessed grooves extend inwardly in the radial direction of the magnetic material piece 132. The recessed grooves extend in the direction parallel to the rotation axis O direction.
Each of the inner circumferential side slits 145b is formed of, for example, a recessed groove (for example, a recessed groove or the like formed by cutting away the magnetic material piece 132 from its inner circumferential surface outwardly in the radial direction) provided in the inner circumferential surface of the magnetic material piece 132. The depth directions of the recessed grooves extend outwardly in the radial direction of the magnetic material piece 132. The recessed grooves extend in the direction parallel to the rotation axis O direction.

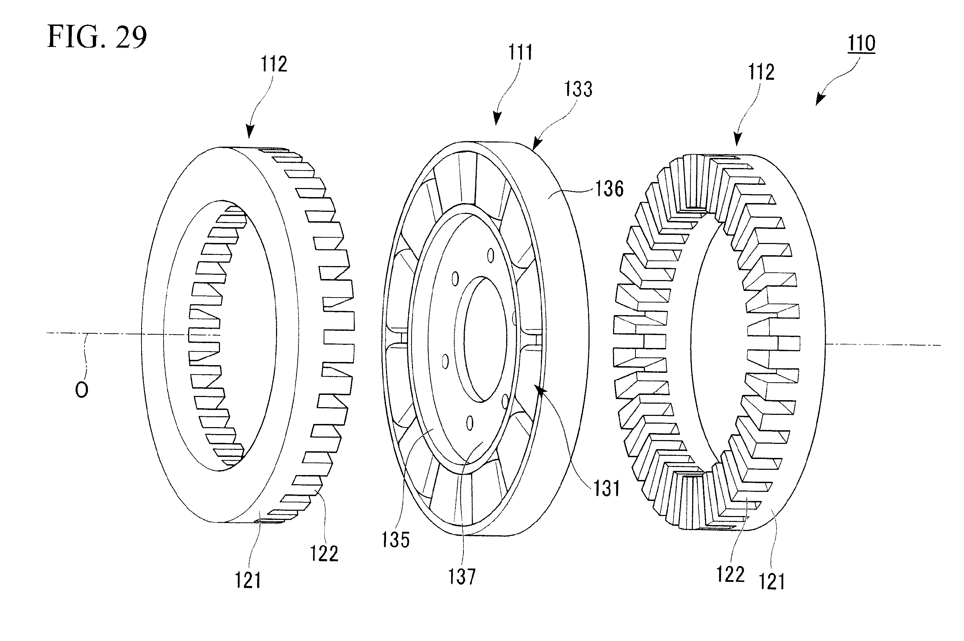

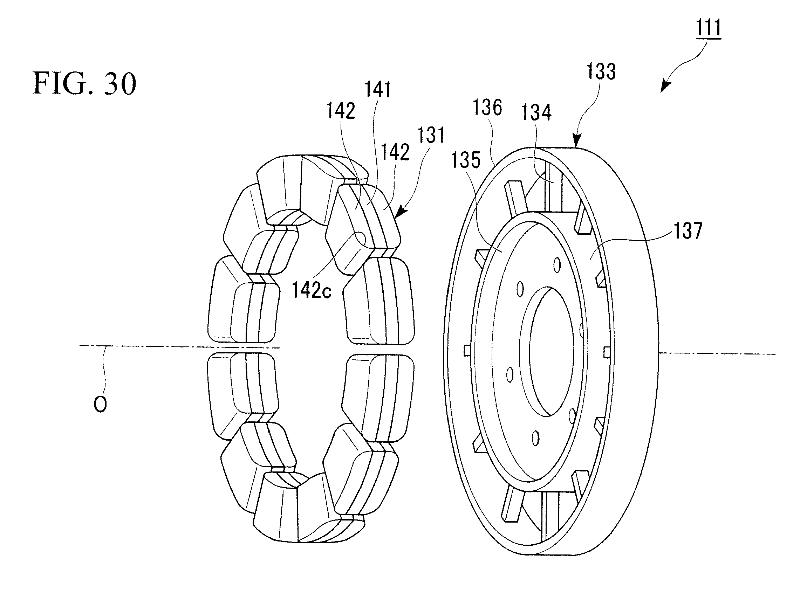

Hereunder is a description of an axial gap motor according to a third embodiment of the present invention with reference to the drawings.
An axial gap motor 110 according to the present embodiment includes a substantially annular rotor 111 and a pair of stators 112 and 112, as shown for example in FIG. 29 and FIG. 30. Here, the substantially annular rotor 111 is provided rotatably about a rotation axis O of the axial gap motor 110. The pair of stators 112 and 112 are oppositely arranged so as to sandwich the rotor 111 in the rotation axis O direction. The stator 112 has stator windings with a plurality of phases that generate a rotating magnetic field for rotating the rotor 111.

The axial gap motor 110 is mounted as a drive source in, for example, a motor vehicle such as a hybrid motor vehicle or an electric motor vehicle, and has its output shaft connected to an input shaft of a transmission (not shown in the figures). Thereby, the driving force of the axial gap motor 110 is transmitted to the drive wheels (not shown in the figures) of the motor vehicle via the transmission.

When a driving force is transmitted to the axial gap motor 110 from the drive wheels in deceleration of the vehicle, the axial gap motor 110 functions as a generator, to thereby generate a so-called regenerative braking force. As a result, the axial gap motor 110 recovers the motive energy of the vehicle body as electric energy (regenerative energy). Furthermore, for example in a hybrid motor vehicle, when the rotation shaft of the axial gap motor 110 is coupled to a crankshaft of an internal combustion engine (not shown in the figures), the axial gap motor 110 also functions as a generator even if an output of the internal combustion engine is transmitted to the axial gap motor 110. As a result, the axial gap motor 110 produces electric power energy.

As shown for example in FIG. 29, each of the stators 112 includes: a substantially annular plate-shaped yoke portion 121; a plurality of teeth 122, ..., and 122; and stator windings (not shown in the figure) each fitted between appropriate teeth 122 and 122. Here, the teeth 122 protrude toward the rotor 111 from positions on an opposing surface of the yoke portion 121 that is opposed to the rotor 111 and also extends in the radial direction, the positions being circumferentially spaced apart by a predetermined distance along the rotation axis O direction.

Each of the stators 112 is, for example, of 6N type with six main poles (for example, U+, V+, W+, U-, V-, W-). It is configured such that a U+, V+, W+ poles of one stator 112 are respectively opposed to a U-, V-, W- poles of the other stator 112 in the rotation axis O direction.
For example, in a pair of stators 112 and 112 opposed to each other in the rotation axis O direction, three teeth 122, 122 and 122 of one stator 112 corresponding to a U+, V+, W+ poles are set to be opposed in the rotation axis O direction to three teeth 122, 122 and 122 of the other stator 112 corresponding to a U-, V-, W- poles. That is, in a pair of stators 112 and 112 opposed to each other in the rotation axis O direction, a current-carrying state of the teeth 122 of one stator 112 is set to be a reversal of a current-carrying state of the teeth 122 of the other stator 112 in terms of electric angle.

As shown for example in FIG. 30, the rotor 111 includes: a plurality of magnet pieces 131, ..., and 131; and a rotor frame 133 made of a non-magnetic material that contains the magnet pieces 131, ..., and 131.

The rotor frame 133 includes: an inner circumferential side cylindrical portion 135; an outer circumferential side cylindrical portion 136; and a connection portion 137. Here, the inner circumferential side cylindrical portion 35 is connected by means of a plurality of radial ribs 134, ..., 134 that are circumferentially arranged with a predetermined distance spaced apart. Furthermore, the connection portion 137 is formed in an annular plate shape that protrudes inwardly from an inner circumferential surface of the inner circumferential side cylindrical portion 135, and is connected to an external drive shaft (for example, an input shaft of a transmission for a motor vehicle, or the like).
The plurality of magnet pieces 131 contained in the rotor frame 133 are sandwiched by the inner circumferential side cylindrical portion 135 and the outer circumferential side cylindrical portion 136 in the radial direction, and are also arranged so as to be circumferentially adjacent to each other with the radial rib 134 interposed therebetween.

The magnet piece 131 includes: a substantially fan-like plate-shaped permanent magnet piece 41 magnetized in a thickness direction (that is, in the direction parallel to the rotation axis O direction); and a pair of substantially fan-like plate-shaped magnetic material members 142 and 142 that sandwich the permanent magnet piece 141 in the thickness direction. The permanent magnet pieces 141 and 141 of the circumferentially adjacent magnet pieces 131 and 131 are set so that their magnetization directions are different from each other.
That is, the magnet piece 131 provided with a permanent magnet piece 141 with the N pole on one side in the direction parallel to the rotation axis O direction is circumferentially adjacent to the magnet piece 131 provided with a permanent magnet piece 141 with the S pole on the one side in the direction parallel to the rotation axis O.

In the pair of magnetic material members 142 and 142 which cover one surface and the other surface in the thickness direction of the permanent magnet piece 141, a cross-section in the thickness direction is a substantially fan shape substantially equivalent to that of the permanent magnet piece 141.
Furthermore, there are formed taper-like or arc-like chamfered shapes 142c on circumferential end portions of the magnetic material member 142.
The permanent magnet piece 141 of the magnet piece 131 contained in the rotor frame 133 is sandwiched by a pair of circumferentially adjacent radial ribs 134, 134 in the circumferential direction.

As described above, according to the axial gap motor 110 of the third embodiment, the magnet piece 131 is provided with the magnetic material members 142 and 142 that sandwich the magnetic poles of the permanent magnet piece 141. This prevents decrease in permeance of the permanent magnet piece 141. As a result, it is possible to suppress demagnetization of the permanent magnet piece 141, and also to increase the reluctance torque
Furthermore, with the taper-like or arc-like chamfered shapes 142c being formed on the circumferential end portions of the magnetic material member 142, it is possible to suppress an abrupt change in magnetic resistance between the pair of stators 112 and 112, leading to suppression of the occurrence of a torque ripple.

In the aforementioned embodiment, the radial rib 134 is provided between the circumferentially adjacent magnet pieces 131 and 131 in the rotor frame 133. However, the configuration is not limited to this. For example, a gap may be provided instead of the radial rib 134.

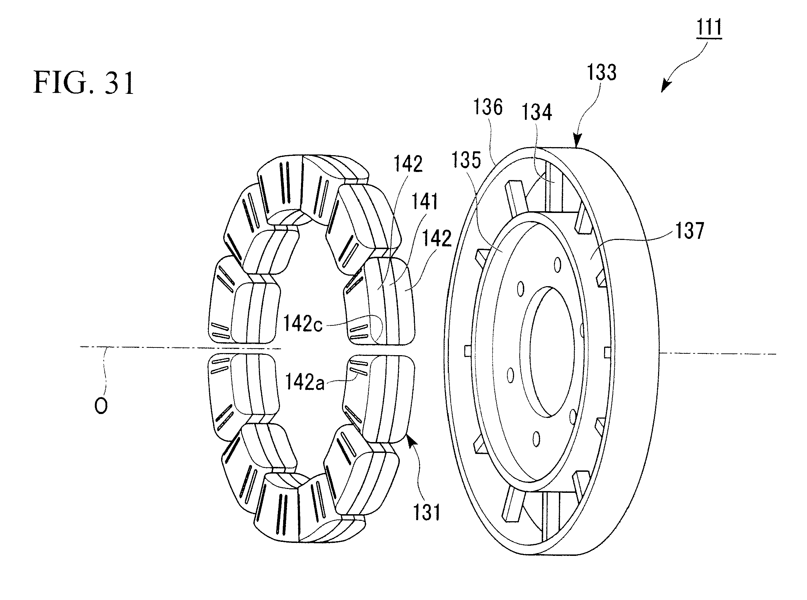

In the aforementioned embodiment, a plurality of through holes 142a, ..., 142a that penetrate in the direction parallel to the rotation axis O direction may be provided in the vicinity of circumferential end portions of the magnetic material member 142 of magnet piece 131, as is the case for example with a first modified example shown in FIG. 31. Each of the through holes 142a has, for example, an elongated hole shape whose cross-sectional shape in the rotation axis O direction has its longitudinal direction coinciding with the radial direction. The through holes 142a are circumferentially arranged with a predetermined distance therebetween.
According to the first modified example, with the through holes 142a being provided in the vicinity of circumferential end portions of the magnetic material member 142, it is possible to form magnetic paths penetrating the magnetic material member 142 between the pair of stators 112 and 112. Therefore, it is possible to impart desired magnetic directionality to electric current flux by the stator windings of the stators 112 and 112. As a result, it is possible to increase the torque to be outputted. Furthermore, with the formation of the above magnetic paths, it is possible to perform waveform shaping of the electric current flux by the stator windings of the pair of stators 112 and 112 so as to suppress an abrupt change in magnetic resistance between the pair of stators 112 and 112. As a result, it is possible to suppress the occurrence of a torque ripple and a harmonic of an electric current flux waveform, to thereby reduce iron loss.

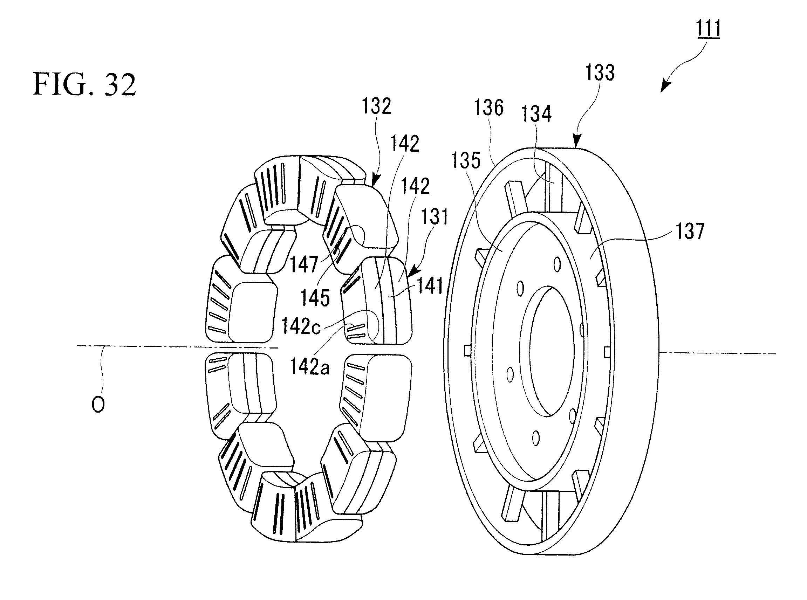

In the aforementioned embodiment, the rotor 111 is provided with the plurality of magnet pieces 131, ..., and 131 and the rotor frame 133 made of a non-magnetic material that contains the magnet pieces 131, ..., and 131. However, the configuration is not limited to this. For example, as is the case with a second modified example shown in FIG. 32, the rotor 111 may be made of: a plurality of magnet pieces 131, ..., and 131; a plurality of magnetic material pieces 132, ..., and 132; and a rotor frame 133. In addition, the magnet pieces 131 and the magnetic material pieces 132 are contained in the rotor frame 133 in a state of being alternately arranged in the circumferential direction.

In the second modified example, the magnet pieces 131 and the magnetic material pieces 132 contained in the rotor frame 133 are arranged so as to be sandwiched by the inner circumferential side cylindrical portion 135 and the outer circumferential side cylindrical portion 136 in the radial direction and to be circumferentially adjacent to each other via the radial rib 134.
The magnetic material piece 132 includes a plurality of magnetic material piece through holes 145, ..., 145 that penetrate in the direction parallel to the rotation axis O direction. Each of the magnetic material piece through holes 145 has, for example, an elongated hole shape whose cross-sectional shape in the rotation axis O direction has its longitudinal direction coinciding with the radial direction. The magnetic material piece through holes 45 are circumferentially arranged with a predetermined distance therebetween.
Furthermore, there are formed taper-like or arc-like chamfered shapes 147 on circumferential end portions of the magnetic material piece 132.

In the second modified example, the permanent magnet pieces 141, ..., and 141 of the magnet pieces 131, ..., and 131 contained in the rotor frame 133 may be set to have the same magnetization direction.

According to the axial gap motor 110 of the second modified example, with the magnetic material piece through holes 145 being provided in the magnetic material pieces 132 that are arranged alternately with the magnet pieces 131 in the circumferential direction, it is possible to form magnetic paths penetrating the magnetic material piece 132 between the pair of stators 112 and 112. Therefore, it is possible to more suitably impart desired magnetic directionality to electric current flux by the stator windings of the stators 112. As a result, it is possible to increase the torque to be outputted. Furthermore, with the formation of the above magnetic paths, it is possible to perform waveform shaping of the electric current flux by the stator windings of the pair of stators 112 and 112 so as to suppress an abrupt change in magnetic resistance between the pair of stators 112 and 112. As a result, it is possible to suppress the occurrence of a torque ripple and a harmonic of an electric current flux waveform, to thereby reduce iron loss.

In the case where the permanent magnet pieces 141 of the magnet pieces 131 have only the N poles opposed to one of the pair of stators 112 and 112 and have only the S poles opposed to the other, an optimal conduction phase for a magnet torque by the magnet piece 131 coincides with an optimal conduction phase for a reluctance torque by the magnetic material piece 132, in application of current to the stator windings of the pair of stators 112 and 112. As a result, it is possible to effectively utilize the magnet torque and the reluctance torque, to thereby effectively increase the output.

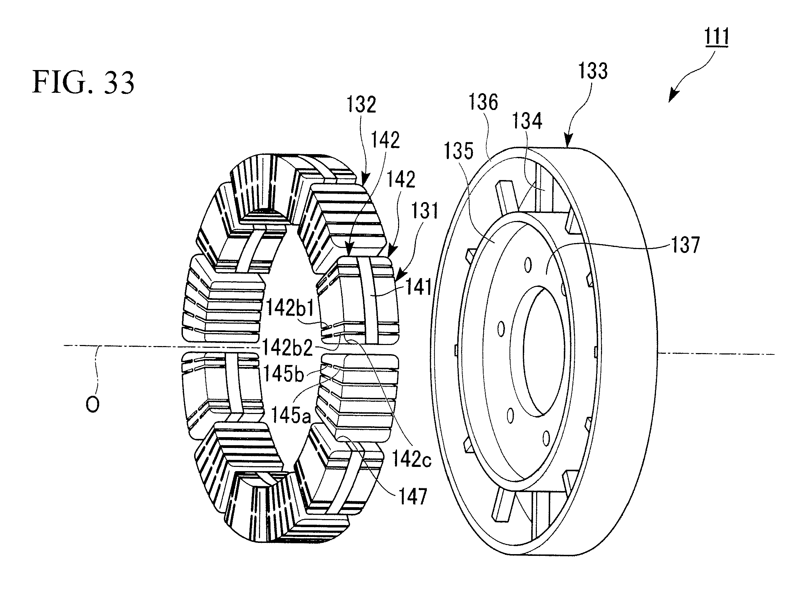

In the aforementioned first modified example of the second embodiment, the magnetic material member 142 of the magnet piece 131 is provided with the through holes 142a. In addition, in the aforementioned second modified example of the third embodiment, the magnetic material piece 132 is provided with the magnetic material piece through holes 145. However, the configurations are not limited to these. For example, as is the case with a third modified example shown in FIG. 33, the magnetic material member 142 may be provided with inner circumferential side slits 142b1 or outer circumferential side slits 142b2 that penetrate in the direction parallel to the rotation axis O direction, instead of the through holes 142a. Furthermore, the magnetic material piece 132 may be provided with a plurality of outer circumferential side slits 145a or a plurality of inner circumferential side slits 145b that penetrate in the direction parallel to the rotation axis O direction, instead of the magnetic material piece through holes 145.

Here, each of the inner circumferential side slits 142b1 is formed of, for example, a recessed groove (for example, a recessed groove or the like formed by cutting away the magnetic material member 142 from its inner circumferential surface outwardly in the radial direction) provided in the inner circumferential surface of the magnetic material member 142. The depth directions of the recessed grooves extend outwardly in the radial direction of the magnetic material member 142. The recessed grooves extend in the direction parallel to the rotation axis O direction.
Each of the outer circumferential side slits 142b2 is formed of, for example, a recessed groove (for example, a recessed groove or the like formed by cutting away the magnetic material member 142 from its outer circumferential surface inwardly in the radial direction) provided in the outer circumferential surface of the magnetic material member 142. The depth directions of the recessed grooves extend inwardly in the radial direction of the magnetic material member 142. The recessed grooves extend in the direction parallel to the rotation axis O direction.
Each of the outer circumferential side slits 145a is formed of, for example, a recessed groove (for example, a recessed groove or the like formed by cutting away the magnetic material piece 132 from its outer circumferential surface inwardly in the radial direction) provided in the outer circumferential surface of the magnetic material piece 132. The depth directions of the recessed grooves extend inwardly in the radial direction of the magnetic material piece 132. The recessed grooves extend in the direction parallel to the rotation axis O direction.
Each of the inner circumferential side slits 145b is formed of, for example, a recessed groove (for example, a recessed groove or the like formed by cutting away the magnetic material piece 132 from its inner circumferential surface outwardly in the radial direction) provided in the inner circumferential surface of the magnetic material piece 132. The depth directions of the recessed grooves extend outwardly in the radial direction of the magnetic material piece 132. The recessed grooves extend in the direction parallel to the rotation axis O direction.

### INDUSTRIAL APPLICABILITY

It is possible to provide an axial gap motor capable of reducing eddy current generated when current is applied to thereby improve operation efficiency, while at the same time effectively utilizing the permanent magnets and the magnetic materials provided in the rotor to thereby effectively increase an output.
Furthermore, it is possible to provide an axial gap motor capable of effectively utilizing the permanent magnets and the magnetic materials provided in the rotor to thereby effectively increase an output.

## Claims

1. An axial gap motor, comprising:
a rotor having permanent magnet pieces; and
a pair of stators that are oppositely arranged so as to sandwich the rotor in a rotation axis direction thereof, wherein:
the rotor comprises magnetic material pieces that are arranged along a circumferential direction thereof in a manner alternating with the permanent magnet pieces;
the permanent magnet pieces have a magnetization direction in parallel with the rotation axis direction, with N poles thereof opposed to the stator on one side in the rotation axis direction, and with S poles thereof opposed to the stator on the other side in the rotation axis direction; and
each of the magnetic material pieces comprises magnetic material piece penetration portions that penetrate in a direction parallel to the rotation axis direction.

2. The axial gap motor according to claim 1, wherein
a magnetic material member is provided on a surface of each of the permanent magnet pieces, the surface facing either one of the one side and the other side in the rotation axis direction, or alternatively on surfaces of each of the permanent magnet pieces, one of the surfaces facing the one side and the other of the surfaces facing the other side in the rotation axis direction.

3. The axial gap motor according to claim 2, wherein
each of the magnetic material members further comprises a penetration portion in a vicinity of circumferential end portions, the penetration portion penetrating in the direction parallel to the rotation axis direction.

4. The axial gap motor according to claim 1, further comprising
sub-permanent magnets each of which is arranged along circumferential end portions of each of the permanent magnet pieces, the sub-permanent magnets being magnetized in a direction perpendicular to the rotation axis direction and a radial direction.

5. The axial gap motor according to claim 4, further comprising
second sub-permanent magnets each of which is arranged along radial end portions of each of the permanent magnet pieces, the second sub-permanent magnets being magnetized in the radial direction.

6. The axial gap motor according to claim 1, further comprising
partition members each of which is arranged between the permanent magnet piece and the magnetic material piece that are circumferentially adjacent to each other, the partition members being made of a non-magnetic material.

7. The axial gap motor according to claim 2, further comprising
partition members each of which is arranged between the permanent magnet piece and the magnetic material piece that are circumferentially adjacent to each other, the partition members being made of a non-magnetic material.

8. The axial gap motor according to claim 7, further comprising
spacer members each of which is arranged, on both end portions in the rotation axis direction of the partition member, between the magnetic material member and the magnetic material piece that are circumferentially adjacent to each other, the spacer members being made of a non-magnetic material.

9. The axial gap motor according to claim 8, wherein
the spacer members have a hollow shape.

10. The axial gap motor according to claim 8, wherein
the spacer members are made of a stacked layer structure where the non-magnetic materials with an insulating property and the non-magnetic materials with a non-insulating property are stacked.

11. The axial gap motor according to claim 6 or claim 7, wherein
the partition members have a hollow shape.

12. The axial gap motor according to claim 6 or claim 7, wherein
the partition members are made of a stacked layer structure where the non-magnetic materials with an insulating property and the non-magnetic materials with a non-insulating property are stacked.

13. The axial gap motor according to claim 6 or claim 7, further comprising:
an inner circumferential side ring arranged on an inner circumferential side of the rotor; and
an outer circumferential side ring arranged on an outer circumferential side of the rotor, wherein
the partition members connects the inner circumferential side ring and the outer circumferential side ring in a state of being arranged coaxially to each other, to thereby form ribs.

14. An axial gap motor, comprising:
a rotor having permanent magnet pieces; and
a pair of stators that are oppositely arranged so as to sandwich the rotor in a rotation axis direction thereof, wherein:
the rotor comprises: magnetic material members each of which is arranged on surfaces of the permanent magnet pieces, one of the surfaces facing one side and the other of the sufaces facing the other side in the rotation axis direction; and spacers each of which is provided between the permanent magnet pieces that are circumferentially adjacent to each other, the spacers being gaps or being made of a non-magnetic material; and
each of the magnetic material members comprises penetration portions in a vicinity of circumferential end portions, the penetration portions penetrating in a direction parallel to the rotation axis direction.

15. An axial gap motor, comprising:
a rotor having permanent magnet pieces; and
a pair of stators that are oppositely arranged so as to sandwich the rotor in a rotation axis direction thereof, wherein:
the rotor comprises: magnetic material members each of which is arranged on surfaces of the permanent magnet pieces, one of the surfaces facing one side and the other of the surfaces facing the other side in the rotation axis direction; and spacers each of which is provided between the permanent magnet pieces that are circumferentially adjacent to each other, the spacers being gaps or being made of a non-magnetic material; and
each of the magnetic material members comprises taper-like or arc-like chamfered shapes, each on each circumferential end portion.

16. The axial gap motor according to claim 15, wherein
each of the magnetic material members further comprises penetration portions in a vicinity of circumferential end portions, the penetration portions penetrating in the direction parallel to the rotation axis direction.

17. The axial gap motor according to claim 14 or claim 15, wherein
the rotor further comprises magnetic material pieces that are arranged in a manner alternating with the permanent magnet pieces in a circumferential direction.

18. The axial gap motor according to claim 17, wherein
each of the magnetic material pieces further comprises magnetic material piece penetration portions that penetrate in the direction parallel to the rotation axis.
